# EUROPÄISCHE PATENTSCHRIFT

(11) **EP 3 643 615 B1**
(45) Veröffentlichungstag und Bekanntmachung des Hinweises auf die Patenterteilung: **08.02.2023**
(21) Anmeldenummer: 19205363.5
(22) Anmeldetag: 25.10.2019
(51) Int. Cl.: B64D 11/06

(54) **FLUGZEUGSITZVORRICHTUNG**
AEROPLANE SEATING DEVICE
DISPOSITIF DE SIÈGE D'AVION

(30) Priorität: 25.10.2018 DE 102018126680
(43) Veröffentlichungstag der Anmeldung: 29.04.2020
(73) Patentinhaber: Recaro Aircraft Seating GmbH & Co. KG, 74523 Schwäbisch Hall (DE)
(72) Erfinder: KOLON, Philipp, 74613 Öhringen (DE)
(74) Vertreter: Daub, Thomas

(56) Entgegenhaltungen:
- EP-A1- 3 225 548
- WO-A1-2018/051497
- DE-A1-102009 005 905
- US-A1- 2003 146 654
- US-A1- 2011 210 205
- US-A1- 2018 281 963

## Beschreibung

### Stand der Technik

Die Erfindung betrifft eine Flugzeugsitzvorrichtung nach dem Oberbegriff des Patentanspruchs 1.

In der US 2018/281963 A1 und der DE 10 2009 005 905 A1 ist bereits eine Flugzeugsitzvorrichtung mit zumindest einem Sitzbereich und mit zumindest einer zwischen einem geöffneten Zustand und einem geschlossenen Zustand verstellbaren Trenneinheit, die dazu vorgesehen ist, den zumindest einen Sitzbereich in zumindest einem Betriebszustand zumindest teilweise von einem Rest einer Kabine, insbesondere von zumindest einem Gang in einer Kabine, abzutrennen, und mit zumindest einem Durchgangsbereich vorgeschlagen worden, durch den der Sitzbereich zugänglich ist, wobei die Trenneinheit dazu vorgesehen ist, den Durchgangsbereich zumindest in ihrem geschlossenen Zustand zumindest teilweise zu verschließen.

Die Aufgabe der Erfindung besteht insbesondere darin, eine gattungsgemäße Vorrichtung mit verbesserten Eigenschaften hinsichtlich eines Komforts und einer Privatsphäre für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einem Sitzbereich und mit zumindest einer zwischen einem geöffneten und einem geschlossenen Zustand verstellbaren Trenneinheit, die dazu vorgesehen ist, den zumindest einen Sitzbereich in zumindest einem Betriebszustand zumindest teilweise von einem Rest einer Kabine, insbesondere von zumindest einem Gang in einer Kabine, abzutrennen, und mit zumindest einem Durchgangsbereich, durch den der Sitzbereich zugänglich ist, wobei die Trenneinheit dazu vorgesehen ist, den Durchgangsbereich zumindest in ihrem geschlossenen Zustand zumindest teilweise zu verschließen.

Erfindungsgemäß wird vorgeschlagen, dass die zumindest eine Trenneinheit wenigstens ein ausziehbares Trennelement aufweist, das zumindest im Wesentlichen aus einem biegeschlaffen Material, insbesondere einem Textil, einem Leder und/oder einer Folie, gebildet ist. Unter einem "Sitzbereich" soll insbesondere ein Bereich verstanden werden, in dem zumindest ein Flugzeugsitz, vorzugsweise ein als ein Einzelsitz ausgebildeter Flugzeugsitz, oder eine aus zumindest zwei Flugzeugsitzen gebildete Sitzeinheit angeordnet ist und der zum Aufenthalt wenigstens eines Passagiers während eines Fluges in einem Flugzeug vorgesehen ist. In einem Sitzbereich sind vorzugsweise weitere Elemente angeordnet, die von einem Passagier nutzbar sind, wie insbesondere eine Konsole, ein Ottoman, Verstaumöglichkeiten, Ablageelemente und/oder Entertainmentvorrichtungen. Der Sitzbereich ist insbesondere als ein Teilbereich einer Kabine, insbesondere einer Flugzeugkabine, ausgebildet. Ein Sitzbereich grenzt vorzugsweise an zumindest einen Gang der Kabine an. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Der Flugzeugsitz weist zumindest einen Sitzboden und eine Rückenlehne auf. Der Flugzeugsitz ist vorzugsweise als ein Full-Flat Flugzeugsitz ausgebildet, der in zumindest einem Zustand eine zumindest im Wesentlichen ebene Liegefläche ausbildet. Der Sitzbereich kann insbesondere zeitweise auch als ein Liegebereich ausgebildet sein. Vorzugsweise weist der Flugzeugsitz eine Sitzposition und eine Liegeposition auf, in der der Flugzeugsitz von einem Passagier benutzt werden kann. Unter einer "Sitzposition" soll dabei eine Stellung des Flugzeugsitzes verstanden werden, in der die Rückenlehne im Wesentlichen senkrecht ausgerichtet ist, wobei ein Passagier in dem Flugzeugsitz insbesondere aufrecht sitzen kann. Unter einer "Liegeposition" soll insbesondere eine im Wesentlichen waagerechte Stellung des Flugzeugsitzes verstanden werden, in der sowohl der Sitzboden als auch die Rückenlehne des Flugzeugsitzes im Wesentlichen parallel zu einem Kabinenboden ausgerichtet sind und ein Passagier auf dem Flugzeugsitz liegen kann. Unter "zumindest im Wesentlichen parallel zu dem Kabinenboden" soll insbesondere ein Neigungswinkel von 3 Grad verstanden werden.

Unter einer "Trenneinheit" soll insbesondere eine Baugruppe verstanden werden, die dazu vorgesehen ist, den zumindest einen Sitzbereich in zumindest einem Betriebszustand zumindest teilweise von dem Rest der Kabine, insbesondere von zumindest einem Gang in der Kabine, abzutrennen. Vorzugsweise trennt die Trenneinheit den zumindest einen Sitzbereich in zumindest einem Betriebszustand zumindest teilweise physisch, insbesondere so, dass ein Durchgang versperrt ist, und zumindest teilweise optisch, insbesondere zumindest teilweise blickdicht und vorzugsweise komplett blickdicht, von dem Rest der Kabine, insbesondere von zumindest einem Gang in der Kabine, ab. Die Trenneinheit ist zumindest zwischen einem geöffneten Zustand und einem geschlossenen Zustand verstellbar. Vorzugsweise kann die Trenneinheit zusätzlich in zumindest einer Zwischenstellung zwischen dem geöffneten Zustand und dem geschlossenen Zustand gehalten werden. Unter einer "Kabine" soll dabei insbesondere ein innerer Bereich des Flugzeugs verstanden werden, in dem sich insbesondere Passagiere während eines Fluges aufhalten. Die Kabine weist einen Kabinenboden, eine Kabinendecke und zumindest eine Kabinenwand auf. Die Kabine kann insbesondere in mehrere Abschnitte unterteilt sein. Die Kabine weist zumindest einen Gang auf. Unter einem "Gang" soll insbesondere ein Korridor auf dem Kabinenboden verstanden werden, der frei von Hindernissen ist und der zumindest zu einem Durchschreiten der Kabine vorgesehen ist. Vorzugsweise verläuft der zumindest eine Gang parallel zu einer Längsrichtung des Flugzeugs. Vorzugsweise sind in der Kabine zwei Gänge angeordnet, die parallel zueinander verlaufen. Grundsätzlich kann in der Kabine jedoch auch lediglich ein Gang, insbesondere in einer Mitte der Kabine, angeordnet sein. Unter einem "Durchgangsbereich" soll insbesondere ein Bereich verstanden werden, den ein Passagier zum Erreichen eines Flugzeugsitzes von einem Gang in einen Sitzbereich durchschreitet oder zum Erreichen eines Gangs von einem Flugzeugsitz aus dem Sitzbereich durchschreitet. Der Durchgangsbereich ist vorzugsweise zwischen dem Sitzbereich und einem Gang angeordnet. Vorzugsweise erstreckt sich der Durchgangsbereich von dem Kabinenboden bis zu der Kabinendecke. Unter einem "geöffneten Zustand" soll insbesondere ein Betriebszustand der Trenneinheit verstanden werden, in dem der Durchgangsbereich freigegeben ist und von einer Person durchschritten und durchschaut werden kann, wobei vorzugsweise kein Element der Trenneinheit in dem Durchgangsbereich angeordnet ist. Vorzugsweise ist die Trenneinheit in einem geöffneten Zustand vollständig geöffnet. Unter einem "geschlossenen Zustand" soll insbesondere ein Betriebszustand der Trenneinheit verstanden werden, in dem der Durchgangsbereich zumindest von einem Teil der Trenneinheit versperrt ist und von einer Person nicht durchschritten werden kann, wobei zumindest ein Teil der Trenneinheit in dem Durchgangsbereich angeordnet ist. Vorzugsweise ist die Trenneinheit in einem geschlossenen Zustand zumindest teilweise verschlossen. Unter "zumindest teilweise verschlossen" soll in diesem Zusammenhang insbesondere verstanden werden, dass sich zumindest ein Teil der Trenneinheit in einer Richtung parallel zu dem Kabinenboden, insbesondere an zumindest einer Stelle, in den Durchgangsbereich erstreckt und den Durchgangsbereich, insbesondere an der zumindest einen Stelle, vollständig verschließt und dass sich zumindest ein Teil der Trenneinheit in einer Richtung senkrecht zu dem Kabinenboden, insbesondere an zumindest einer Stelle, zumindest teilweise in den Durchgangsbereich erstreckt. Vorzugsweise erstreckt sich zumindest ein Teil der Trenneinheit in dem geschlossenen Zustand von der Liegefläche des Flugzeugsitzes bis zu einem obersten Ende einer Umhausung in den Durchgangsbereich. Vorzugsweise erstreckt sich die Trenneinheit in dem geschlossenen Zustand auf einer Höhe von insbesondere wenigstens 25%, vorzugsweise wenigstens 50% und besonders bevorzugt wenigstens 75% einer Höhe zwischen dem Kabinenboden und der Kabinendecke. Grundsätzlich ist es auch denkbar, dass sich die Trenneinheit von dem Kabinenboden bis zu der Kabinendecke erstreckt. Unter einem "Trennelement" soll insbesondere ein bewegbares Bauteil verstanden werden, das in zumindest einem Betriebszustand dazu vorgesehen ist, eine physische und optische Abtrennung für einen Passagier in einem definierten Bereich bereitzustelle. Unter "zumindest im Wesentlichen" soll in diesem Zusammenhang insbesondere wenigstens zu 75%, vorzugsweise wenigstens zu 90% und besonders bevorzugt wenigstens zu 95%, verstanden werden. Das Trennelement kann zumindest teilweise wenigstens ein anderes Material, insbesondere ein Kunststoff und/oder ein Metall, aufweisen. Vorzugsweise besteht das Trennelement zumindest teilweise aus einem Material mit einer veränderbaren Lichtdurchlässigkeit. Dadurch kann der Passagier vorteilhaft einen Grad einer optischen Abtrennung wählen. Vorzugsweise ist das Trennelement zumindest teilweise beleuchtet. Die zumindest eine Beleuchtungseinheit ist insbesondere dazu vorgesehen, das Trennelement zumindest teilweise zu beleuchten. Die Trenneinheit weist vorzugsweise zumindest eine Beleuchtungseinheit auf. Unter "beleuchtet" soll dabei insbesondere verstanden werden, dass das Trennelement von einer Lichtquelle hinterleuchtet wird und/oder eine Lichtquelle in eine Oberfläche des Trennelements eingelassen ist. Dadurch kann vorteilhaft eine anpassbare Umgebungsbeleuchtung, insbesondere in unterschiedlicher Intensität und/oder Farbe, bereitgestellt werden, was zu einer Erhöhung eines Komforts für den Passagier führt. Zudem kann vorteilhaft ein Muster, insbesondere eine Sitznummer und/oder ein Logo auf das Trennelement projiziert werden. Unter einem "biegeschlaffen Material" soll insbesondere ein Material mit einem niedrigen Elastizitätsmodul und einer geringen Dehnsteifigkeit verstanden werden, wobei das biegeschlaffe Material bei einer geringen Kraft- und/oder Momentenbeanspruchung eine große Verformung aufweist. Vorzugsweise ist das biegeschlaffe Material aufrollbar, insbesondere ohne plastische Verformungen aufrollbar, ausgebildet. Besonders bevorzugt ist das biegeschlaffe Material als ein Textil, insbesondere als ein Stoff, ein Leder und/oder eine Folie ausgebildet. Das biegeschlaffe Material kann mit zumindest einem Falz ausgebildet sein. Vorzugsweise ist das biegeschlaffe Material brandhemmend ausgebildet. Bei einer Ausbildung des biegeschlaffen Materials als ein Textil kann das biegeschlaffe Material insbesondere aus mehreren Webungen bestehen, die die veränderbare Lichtdurchlässigkeit ermöglichen. Vorzugsweise weist das biegeschlaffe Material eine Beschichtung auf. Die Beschichtung ist dazu vorgesehen, eine Reinigung des Trennelements, insbesondere des Textils, zu vereinfachen. Vorzugsweise besteht die Beschichtung aus einem Polytetrafluorethylen. Unter einem "Lamellenelement" soll insbesondere eine dünne, ebene Platte verstanden werden, die dazu vorgesehen ist, mit zumindest einem weiteren, insbesondere im Wesentlichen gleich ausgebildeten, Lamellenelement gekoppelt zu werden. Das Lamellenelement ist insbesondere dazu vorgesehen, mit einer Vielzahl von weiteren, insbesondere im Wesentlichen gleich ausgebildeten, Lamellenelementen gekoppelt zu werden. Vorzugsweise sind mehrere miteinander gekoppelte Lamellenelemente in einem geschlossenen Zustand parallel zueinander und zumindest teilweise überlappend angeordnet, um einen möglichst großen Bereich des Durchgangsbereichs zu überspannen. Vorzugsweise sind mehrere miteinander gekoppelte Lamellenelemente in einem geöffneten Zustand parallel zueinander und übereinander gestapelt angeordnet, um möglichst platzsparend untergebracht zu werden. Alternativ sind vorzugsweise mehrere miteinander gekoppelte Lamellenelemente in einem geöffneten Zustand jeweils zueinander verschwenkt und aneinander aufgerollt angeordnet, um möglichst platzsparend untergebracht zu werden. Vorzugsweise ist das Lamellenelement als eine ebene polygonale Platte ausgebildet. Besonders bevorzugt ist das Lamellenelement als eine ebene rechteckförmige Platte ausgebildet. Grundsätzlich kann das Lamellenelement auch Abrundungen aufweisen. Vorzugsweise ist das Lamellenelement brandhemmend ausgebildet. Durch die erfindungsgemäße Flugzeugsitzvorrichtung wird eine vorteilhaft einfach zu bedienende Trenneinheit bereitgestellt. Dadurch wird eine Privatsphäre und damit der Komfort des Passagiers vorteilhaft erhöht. Die erfindungsgemäße Flugzeugsitzvorrichtung bietet eine vorteilhaft große Auswahl zwischen Materialien und Materialkombinationen. Dadurch kann die Flugzeugsitzvorrichtung vorteilhaft speziell für einen Kunden, insbesondere eine Fluggesellschaft, konfiguriert werden. Die erfindungsgemäße Ausgestaltung ermöglicht weiterhin eine besonders wohnliche Atmosphäre innerhalb des Sitzbereiches, was zu einem hohen Komfort für einen Passagier führt. Das Trennelement weist ein vorteilhaft geringes Gewicht auf, insbesondere im Vergleich zu aus dem Stand der Technik bekannten starren Trennwänden. Darüber hinaus ist die Trenneinheit vorteilhaft platzsparend ausgestaltet, sodass diese nur einen geringen Platzbedarf im Sitzbereich aufweist und damit mehr Platz für einen Passagier bietet. Die erfindungsgemäße Flugzeugsitzvorrichtung ermöglicht insbesondere in einem Crashfall eine schnelle und unkomplizierte Evakuierung des Flugzeugs.

Des Weiteren wird vorgeschlagen, dass das Trennelement zumindest im Wesentlichen aus einer zusammenhängenden Konstruktion, insbesondere einem Rollo, einem Plissee oder einem Rollladen, gebildet ist. Unter einer "zusammenhängenden Konstruktion" soll insbesondere verstanden werden, dass das biegeschlaffe Material einstückig und/oder aus mehreren aneinandergefügten Materialteilen ausgebildet ist oder dass mehrere Lamellenelemente miteinander gekoppelt ausgebildet sind. Unter einem "Rollo" soll insbesondere ein Element aus einem biegeschlaffen Material oder aus einer Kombination von mehreren biegeschlaffen Materialien verstanden werden, das in einem geöffneten Zustand aufgerollt ist. Unter einem "Plissee" soll insbesondere ein ziehharmonikaartiges oder leporelloartiges Element aus einem biegeschlaffen Material verstanden werden, das mehrere parallel angeordnete Falze aufweist, wobei das Element in einem geöffneten Zustand zusammengefaltet und in einem geschlossenen Zustand auseinandergefaltet ist. Unter einer "Jalousie" soll insbesondere eine Anordnung von mehreren beweglichen und einzeln verschwenkbaren Lamellenelementen verstanden werden, die in einem geöffneten Zustand und in einem vollständig geschlossenen Zustand parallel zueinander angeordnet sind. Unter einem "Rollladen" soll insbesondere eine Anordnung von mehreren gemeinsam bewegbaren Lamellenelementen verstanden werden, die jeweils mit einem benachbarten Lamellenelement gekoppelt sind, wobei die Lamellenelemente in einem geöffneten Zustand zueinander verschwenkt und aufgerollt und in einem geschlossenen Zustand parallel zueinander angeordnet sind. Diese Ausgestaltung bietet dem Passagier vorteilhaft ein wohnliches Raumgefühl, wodurch ein Komfort für den Passagier erhöht wird. Das Trennelement kann mit dieser Ausgestaltung vorteilhaft variabel gestaltet werden.

Erfindungsgemäß wird vorgeschlagen, dass das Trennelement zumindest im Wesentlichen in horizontaler Richtung ausziehbar ist. Nicht erfindungsgemäß wird vorgeschlagen, dass das Trennelement zumindest im Wesentlichen in vertikaler Richtung ausziehbar ist. Unter "zumindest im Wesentlichen in horizontaler Richtung ausziehbar" soll in diesem Zusammenhang insbesondere verstanden werden, dass eine Winkelabweichung einer Ausziehrichtung des Trennelements von der horizontalen Richtung insbesondere weniger als 10 Grad, vorzugsweise weniger als 5 Grad und besonders bevorzugt weniger als 3 Grad beträgt. Dabei soll unter einer "horizontalen Richtung" insbesondere eine Richtung parallel zu dem Kabinenboden verstanden werden. Unter einer "Ausziehrichtung" soll insbesondere eine Richtung verstanden werden, in der das Trennelement bewegt wird um zwischen einer eingefahrenen und ausgefahrenen Stellung verstellt zu werden. Unter einer "eingefahrenen Stellung" soll dabei insbesondere eine Stellung des Trennelements verstanden werden, bei dem sich die Trenneinheit in einem geöffneten Zustand befindet. Unter einer "ausgefahrenen Stellung" soll dabei insbesondere eine Stellung des Trennelements verstanden werden, bei dem sich die Trenneinheit in einem geschlossenen Zustand oder in einer zwischen einem geöffneten Zustand und einem geschlossenen Zustand befindlichen Zwischenstellung befindet. Unter "zumindest im Wesentlichen in vertikaler Richtung ausziehbar" soll in diesem Zusammenhang insbesondere verstanden werden, dass eine Winkelabweichung einer Ausziehrichtung des Trennelements von der vertikalen Richtung insbesondere weniger als 10 Grad, vorzugsweise weniger als 5 Grad und besonders bevorzugt weniger als 3 Grad beträgt. Unter einer "vertikalen Richtung" soll insbesondere eine Richtung orthogonal zu dem Kabinenboden verstanden werden. Unter "ausziehbar" soll insbesondere verstanden werden, dass das Trennelement von einem geöffneten Zustand in einen geschlossenen Zustand überführbar ist. Vorzugsweise ist das Trennelement von einem Passagier ausziehbar. Besonders bevorzugt ist das Trennelement von einem geschlossenen Zustand in einen geöffneten Zustand überführbar. Durch diese Ausgestaltung kann das Trennelement vorteilhaft ausgezogen werden, um eine Privatsphäre für den Passagier zu erhöhen.

Zudem wird vorgeschlagen, dass das Trennelement zumindest im Wesentlichen in rotatorischer Richtung ausziehbar ist. Unter einer "rotatorischen Richtung" soll dabei insbesondere eine Richtung verstanden werden, die rotatorisch um eine Drehachse verläuft, wobei die Drehachse parallel zu dem Kabinenboden ausgerichtet ist. Vorzugsweise ist ein Radius zwischen der Drehachse und der rotatorischen Richtung, insbesondere Ausziehrichtung, variabel. Vorzugsweise ist das Trennelement als ein Viertel einer Kreisform oder einer Ellipsenform ausgebildet. Durch diese Ausgestaltung kann das Trennelement vorteilhaft ausgezogen werden, um eine Privatsphäre für den Passagier zu erhöhen.

Erfindungsgemäß wird vorgeschlagen, dass die Trenneinheit zumindest eine Verstaueinheit aufweist, die in einem geöffneten Zustand dazu vorgesehen ist, das Trennelement zumindest im Wesentlichen zu verstauen. Unter einer "Verstaueinheit" soll insbesondere eine Einheit verstanden werden, die dazu vorgesehen ist, das Trennelement in der eingefahrenen Stellung zumindest im Wesentlichen aufzunehmen. Vorzugsweise ist die Verstaueinheit dazu vorgesehen, das Trennelement in der eingefahrenen Stellung vollständig aufzunehmen. Besonders bevorzugt ist die Verstaueinheit in einem geöffneten Zustand der Trenneinheit außerhalb des Durchgangsbereichs angeordnet. Die Verstaueinheit ist insbesondere dazu vorgesehen, dass das Trennelement in der eingefahrenen Stellung für einen Passagier unsichtbar ist. Vorzugsweise weist die Verstaueinheit zumindest ein Gehäuse auf. Vorzugsweise ist die Verstaueinheit beweglich gelagert. Die Verstaueinheit ist vorzugsweise an einer Flugzeugsitzvorrichtung oder einer weiteren Flugzeugsitzvorrichtung angeordnet. Grundsätzlich kann die Verstaueinheit auch an einem Flugzeugsitz angeordnet sein und/oder mit einem Flugzeugsitz gekoppelt sein. Unter "zumindest im Wesentlichen" soll in diesem Zusammenhang insbesondere verstanden werden, dass das Trennelement insbesondere wenigstens zu 90%, vorzugsweise wenigstens zu 95% und besonders bevorzugt wenigstens zu 99% seiner ausziehbaren Länge in der Verstaueinheit verstaut ist. Durch diese Ausgestaltung ist das Trennelement in einem geöffneten Zustand durch den Passagier nicht wahrnehmbar und vorteilhaft platzsparend verstaut.

Ferner wird vorgeschlagen, dass die zumindest eine Verstaueinheit wenigstens eine Rückholeinheit umfasst, die dazu vorgesehen ist, das Trennelement in zumindest einem Betriebszustand zurückzuholen. Unter einer "Rückholeinheit" soll insbesondere eine Baugruppe verstanden werden, die das Trennelement von der ausgefahrenen Stellung in die eingefahrene Stellung überführt, insbesondere selbsttätig überführt. Grundsätzlich wäre jedoch auch denkbar, dass die Rückholeinheit das Trennelement von der eingefahrenen Stellung in die ausgefahrene Stellung überführt. Vorzugsweise weist die Rückholeinheit zumindest ein Federelement auf. Das Federelement ist insbesondere als eine Spiralfeder ausgebildet. Das Federelement ist insbesondere dazu vorgesehen, eine Zugkraft auf das Trennelement, insbesondere auf das biegeschlaffe Material, auszuüben. Die Zugkraft ist dazu vorgesehen, das biegeschlaffe Material faltenfrei zu spannen. Grundsätzlich ist auch denkbar, dass die Rückholeinheit einen Elektromotor aufweist. Unter "zurückholen" soll dabei insbesondere verstanden werden, dass das Trennelement in eine eingefahrene Stellung überführt und in der Verstaueinheit verstaut wird. Die Rückholeinheit bewirkt vorteilhaft, dass das Trennelement selbsttätig in die Verstaueinheit zurückgeholt wird, wenn die Trenneinheit von dem geschlossenen Zustand in den geöffneten Zustand überführt werden soll. Dies ermöglicht einen hohen Komfort für den Passagier, da der Passagier bei einer Überführung der Trenneinheit von dem geschlossenen Zustand in den geöffneten Zustand keine Aufmerksamkeit auf die Trenneinheit richten muss. Die Zugkraft bewirkt vorteilhaft, dass das Trennelement gespannt ist und damit eine Faltenbildung vermieden werden kann.

Zudem wird vorgeschlagen, dass die Verstaueinheit zumindest im Wesentlichen in horizontaler Richtung beweglich gelagert ist. Vorzugsweise wird die Verstaueinheit zumindest im Wesentlichen in der horizontalen Richtung translatorisch von einer Nichtgebrauchsstellung der Verstaueinheit in eine Gebrauchsstellung der Verstaueinheit in den Durchgangsbereich bewegt. Die Verstaueinheit ist vorzugsweise manuell, mittels eines Aktuators und/oder mittels eines Elektromotors bewegbar ausgebildet. Eine Bewegung der Verstaueinheit ist vorzugsweise durch zumindest einen Anschlag begrenzt. Besonders bevorzugt verrastet die Verstaueinheit in einer Nichtgebrauchsstellung und/oder einer Nichtgebrauchsstellung der Verstaueinheit. Unter einer "Nichtgebrauchsstellung" soll dabei insbesondere eine Stellung der Verstaueinheit verstanden werden, in der die Verstaueinheit nicht in den Durchgangsbereich ragt und insbesondere innerhalb eines Kabinenelements angeordnet ist. Unter einer "Gebrauchsstellung" soll insbesondere eine Stellung der Verstaueinheit verstanden werden, in der die Verstaueinheit zumindest im Wesentlichen, vorzugsweise vollständig, in dem Durchgangsbereich angeordnet ist und das Trennelement in den Durchgangsbereich ausziehbar ist. In der Gebrauchsstellung der Verstaueinheit kann das Trennelement vorzugsweise in der vertikalen Richtung oder in der rotatorischen Richtung von einer eingefahrenen Stellung in eine ausgefahrene Stellung oder von einer ausgefahrenen Stellung in eine eingefahrene Stellung bewegt werden. In einem Betriebszustand, in dem die Trenneinheit nicht benötigt wird, kann diese vorteilhaft außerhalb des Durchgangsbereichs verstaut werden, sodass diese kein Hindernis in dem Durchgangsbereich darstellt. Durch diese Ausgestaltung kann der Durchgangsbereich in der vertikalen Richtung vorteilhaft teilweise verschlossen werden, da das Trennelement nicht zwingend bis zu dem Kabinenboden ausgezogen werden muss.

Des Weiteren wird vorgeschlagen, dass die Verstaueinheit zumindest im Wesentlichen schwenkbar gelagert ist. Vorzugsweise wird die Verstaueinheit zumindest im Wesentlichen rotatorisch von der Nichtgebrauchsstellung der Verstaueinheit in die Gebrauchsstellung der Verstaueinheit in den Durchgangsbereich bewegt. Die Verstaueinheit ist vorzugsweise manuell, mittels eines Aktuators und/oder mittels eines Elektromotors bewegbar ausgebildet. Eine Bewegung der Verstaueinheit ist vorzugsweise durch zumindest einen Anschlag begrenzt. Besonders bevorzugt verrastet die Verstaueinheit in der Nichtgebrauchsstellung und/oder der Gebrauchsstellung der Verstaueinheit. In der Gebrauchsstellung der Verstaueinheit kann das Trennelement vorzugsweise in der vertikalen Richtung oder in der rotatorischen Richtung von einer eingefahrenen Stellung in eine ausgefahrene Stellung oder von einer ausgefahrenen Stellung in eine eingefahrene Stellung bewegt werden. In einem Betriebszustand, in dem die Trenneinheit nicht benötigt wird, kann diese vorteilhaft außerhalb des Durchgangsbereichs verstaut werden, sodass diese kein Hindernis in dem Durchgangsbereich darstellt. Durch diese Ausgestaltung kann der Durchgangsbereich in der vertikalen Richtung vorteilhaft teilweise verschlossen werden, da das Trennelement nicht zwingend bis zu dem Kabinenboden ausgezogen werden muss. Vorteilhaft kann bei dieser Ausgestaltung alternativ auch erreicht werden, dass der Durchgangsbereich teilweise durch ein Viertel eines kreisförmigen oder ellipsenförmigen Trennelements verschlossen ist.

Erfindungsgemäß wird vorgeschlagen, dass die zumindest eine Trenneinheit wenigstens ein Abschlusselement aufweist, das zur Befestigung des Trennelements an wenigstens einem Kabinenelement vorgesehen ist. Unter einem "Abschlusselement" soll insbesondere ein Bauteil verstanden werden, das zumindest an einem Ende des Trennelements fest mit dem Trennelement verbunden ist, das das Trennelement an zumindest einem Ende des Trennelements begrenzt und das dazu vorgesehen ist, das Trennelement an zumindest einem Kabinenelement zu befestigen. Unter "fest verbunden" soll dabei insbesondere kraftschlüssig, formschlüssig und/oder stoffschlüssig verbunden verstanden werden. Vorzugsweise ist das Abschlusselement mit einer hohen Biegesteifigkeit ausgebildet. Unter "zur Befestigung vorgesehen" soll insbesondere verstanden werden, dass das Trennelement mittels des Abschlusselements in der vollständig ausgefahrenen Stellung lösbar mit wenigstens einem Kabinenelement verbunden werden soll, um das Trennelement in der ausgefahrenen Stellung in der Ausziehrichtung zu fixieren. Vorzugsweise ist das Abschlusselement so ausgebildet, dass es mit einem Rastelement koppelbar ist. Das Rastelement ist vorzugsweise an einem Kabinenelement angeordnet. Unter einem "Kabinenelement" soll insbesondere ein mit einer Primärstruktur des Flugzeugs fest verbundenes Bauteil oder eine Baugruppe verstanden werden, das in der Kabine angeordnet ist. Besonders bevorzugt ist das Kabinenelement als eine weitere Flugzeugsitzvorrichtung ausgebildet. Vorzugsweise ist das Kabinenelement als ein Flugzeugsitzmodul ausgebildet. Grundsätzlich kann das Kabinenelement jedoch auch als eine Trennwand, eine Kabinenwandverkleidung, eine Kabinendeckenverkleidung und/oder ein Gepäckfach ausgebildet sein. Das Gepäckfach ist vorzugsweise über dem Sitzbereich an der Kabinendecke angeordnet. Das Abschlusselement umfasst vorzugsweise zumindest ein Bedienelement. Das Bedienelement ist insbesondere dazu vorgesehen, das Trennelement zwischen zwei Betriebszuständen zu bewegen. Vorzugsweise ist das Bedienelement als ein Griff, eine Taste oder ein Sensor ausgebildet. Das Abschlusselement weist vorzugsweise eine Halteeinheit auf. Die Halteeinheit ist insbesondere dazu vorgesehen, das Trennelement mit dem Abschlusselement zu verbinden. Vorzugsweise ist die Halteinheit als ein Rahmen ausgebildet. Der Rahmen ist insbesondere dazu vorgesehen, einen Keder des Trennelements aufzunehmen. Diese Ausgestaltung ermöglicht eine vorteilhafte Stabilisierung des Trennelements. Zudem ermöglicht das Abschlusselement eine vorteilhaft sichere Handhabung der Trenneinheit. Ein Sensor ermöglicht eine vorteilhaft komfortable Bedienung der Trenneinheit. Vorteilhaft kann durch das Abschlusselement, insbesondere in Kombination mit der Rückholeinheit, eine Faltenbildung vermieden werden.

Erfindungsgemäß wird vorgeschlagen, dass die Trenneinheit zumindest eine Führungseinheit aufweist, die zumindest dazu vorgesehen ist, das Trennelement und/oder das Abschlusselement in zumindest einem Betriebszustand zu führen und/oder zu fixieren. Unter einer "Führungseinheit" soll dabei insbesondere eine Baugruppe verstanden werden, die das Trennelement und/oder das Abschlusselement abstützt, um eine definierte Bewegung entlang einer Führungsbahn, die vorzugsweise in der horizontalen Richtung oder der vertikalen Richtung verläuft, zu ermöglichen. Vorzugsweise umfasst die Führungseinheit zumindest ein Schienenelement, das fest auf dem Kabinenboden angeordnet und/oder fest mit einem Kabinenelement verbunden ist, und zumindest ein korrespondierendes Führungselement, das mit der Trenneinheit fest verbunden ist. Das korrespondierende Führungselement ist vorzugsweise an dem Abschlusselement angeordnet. Erfindungsgemäß weist die Führungseinheit zumindest ein Scherenelement auf, das an dem Abschlusselement und in der Verstaueinheit angeordnet ist. Die Führungseinheit weist vorzugsweise zumindest ein Federelement, insbesondere eine Zugfeder, eine Druckfeder oder eine Gasdruckfeder, auf. Das Federelement der Führungseinheit ist in zumindest einem Betriebszustand insbesondere dazu vorgesehen, eine Kraft auf das Trennelement und/oder das Abschlusselement aufzubringen, um es von einer eingefahrenen Stellung in eine ausgefahrene Stellung und/oder von einer ausgefahrenen Stellung in eine eingefahrene Stellung zu überführen. Das Federelement der Führungseinheit ist in zumindest einem Betriebszustand insbesondere dazu vorgesehen, eine Kraft auf das Trennelement und/oder das Abschlusselement aufzubringen, um es in einer eingefahrenen Stellung und/oder in einer ausgefahrenen Stellung zu fixieren. Unter "fixieren" soll dabei insbesondere verstanden werden, dass das Trennelement in seiner Stellung gehalten wird. Besonders bevorzugt ist die Führungseinheit dazu vorgesehen, das Trennelement in der eingefahrenen Stellung und/oder in der ausgefahrenen Stellung zu fixieren. Vorzugsweise ist die Führungseinheit dazu vorgesehen, das Trennelement in einer Stellung zwischen der eingefahrenen Stellung und der ausgefahrenen Stellung zu fixieren. Durch diese Ausgestaltung wird eine vorteilhafte Bewegung des Trennelements und/oder des Abschlusselements ermöglicht.

Vorzugsweise weist die Trenneinheit zumindest eine Verriegelungseinheit auf. Mittels der Verriegelungseinheit ist die Trenneinheit zumindest in ihrem geschlossenen Zustand verriegelbar ausgebildet. Die Verriegelung kann insbesondere automatisch und/oder durch eine Betätigung des Bedienelements an dem Abschlusselement erfolgen. Eine Entriegelung der Verriegelungseinheit kann insbesondere automatisch und/oder durch eine Betätigung des Bedienelements an dem Abschlusselement erfolgen. Die Verriegelungseinheit weist vorzugsweise zumindest ein Verriegelungselement auf. Das Verriegelungselement ist vorzugsweise dazu vorgesehen, mit dem Abschlusselement gekoppelt zu werden, um das Trennelement an zumindest einem Kabinenelement zu befestigen. Vorzugsweise ist das Verriegelungselement als ein Rastelement ausgebildet. Durch die Verriegelungseinheit wird eine vorteilhafte Befestigung des Trennelements an zumindest einem Kabinenelement ermöglicht.

Die Trenneinheit weist vorzugsweise eine TTL-Funktion auf. Unter einer "TTL-Funktion" soll dabei insbesondere eine Funktion verstanden werden, die eine Nutzung der Trenneinheit aus Sicherheitsgründen, insbesondere in einer Rollphase, in einer Startphase und in einer Landephase des Flugzeugs, insbesondere aus einer Sicht eines Passagiers, nicht zulässt. Vorzugsweise ist die TTL-Funktion dazu vorgesehen, die Trenneinheit automatisch oder teilautomatisch in einen geöffneten Zustand zu überführen. Vorzugsweise ist die TTL-Funktion dazu geeignet, dass die Trenneinheit für eine Nutzung durch einen Passagier kostenpflichtig freigeschaltet werden kann. Die TTL-Funktion ist insbesondere dazu vorgesehen automatisch und/oder durch Steuerung einer Besatzung des Flugzeugs aktiviert und/oder deaktiviert zu werden. Dadurch kann vorteilhaft eine hohe Betriebssicherheit der Trenneinheit erreicht werden.

Des Weiteren wird vorgeschlagen, dass die Flugzeugsitzvorrichtung zumindest eine Umhausung aufweist, die den Sitzbereich zumindest teilweise, in einer Sitzrichtung betrachtet, insbesondere vor und/oder hinter dem Sitzbereich umgibt, wobei die Trenneinheit zumindest teilweise in der Umhausung angeordnet oder mit dieser gekoppelt ist. Unter einer "Umhausung" soll insbesondere eine Trennwand verstanden werden, die den Sitzbereich permanent von dem Rest einer Kabine, insbesondere einem vor und/oder hinter dem Sitzbereich angeordneten weiteren Sitzbereich, zumindest optisch abtrennt. Unter einer "Sitzrichtung" soll insbesondere eine Richtung verstanden werden, welche parallel zu dem Kabinenboden und zumindest im Wesentlichen senkrecht zu einer von der Rückenlehne gebildeten Rückenlehnenfläche ausgerichtet ist. Vorzugsweise ist die Flugzeugsitzvorrichtung mit einer in der Sitzrichtung betrachtet vor oder hinter dem Flugzeugsitz angeordneten Umhausung ausgebildet. Dadurch kann eine vorteilhafte Gewichtsreduzierung erreicht werden, da die Umhausung einer weiteren Flugzeugsitzvorrichtung an den Sitzbereich angrenzt. Die Umhausung ist vorzugsweise als ein Kabinenelement ausgebildet. Vorzugsweise ist die Verstaueinheit zumindest teilweise in der Umhausung angeordnet oder mit dieser gekoppelt. Besonders bevorzugt ist die Verstaueinheit als in der Umhausung versenkbar ausgebildet. Durch diese Ausgestaltung kann die Trenneinheit vorteilhaft platzsparend und optisch ansprechend in eine Umhausung integriert werden. Zudem kann durch die Trenneinheit in Verbindung mit der Umhausung ein vorteilhaft vollständig von dem Rest einer Kabine abgetrennter Sitzbereich bereitgestellt werden, was eine Privatsphäre für einen Passagier vorteilhaft erhöht.

Ferner wird vorgeschlagen, dass die Trenneinheit zumindest ein weiteres Trennelement aufweist, das zumindest im Wesentlichen parallel zu dem einen Trennelement angeordnet ist. Vorzugsweise ist das Trennelement und das weitere Trennelement an einem Ende fest mit dem Abschlusselement verbunden. Diese Ausgestaltung ermöglicht eine vorteilhaft einfache Anbindung der Trennelemente an das Abschlusselement.

Zudem wird vorgeschlagen, dass die Trenneinheit zumindest ein Umlenkelement aufweist, das in einem Bereich des Abschlusselements angeordnet und zumindest dazu vorgesehen ist, das Trennelement umzulenken. Unter einem "Umlenkelement" soll insbesondere ein Bauteil verstanden werden, das dazu vorgesehen ist, das Trennelement von einer Richtung in eine entgegengesetzte Richtung umzulenken. Vorzugsweise ist das Umlenkelement als mindestens eine Umlenkrolle ausgebildet. Die Umlenkrolle ist insbesondere drehbar gelagert oder starr ausgebildet. Vorzugsweise ist das Trennelement an einem Ende zumindest im Wesentlichen fest mit der Verstaueinheit verbunden. Durch diese Ausgestaltung wird vorteilhaft nur eine Rückholeinheit benötigt. Dadurch wird vorteilhaft ein Gewicht der Flugzeugsitzvorrichtung reduziert.

Des Weiteren wird vorgeschlagen, dass die Trenneinheit zumindest an einer Oberseite wenigstens eine Abdeckeinheit aufweist, die zumindest in einem geschlossenen Zustand dazu vorgesehen ist, das Trennelement zumindest im Wesentlichen zu überdecken. Unter einer "Abdeckeinheit" soll insbesondere ein Bauteil oder eine Baugruppe verstanden werden, die direkt über zwei parallel verlaufenden Trennelementen angeordnet ist. Unter "überdecken" soll insbesondere verstanden werden, dass durch die Abdeckeinheit zumindest ein Bereich zwischen zwei parallel verlaufenden Trennelementen in einer zumindest im Wesentlichen parallelen Ebene zu dem Kabinenboden an einer Oberkante der Trennelemente verschlossen ist. Vorzugsweise verhindert die Abdeckeinheit eine Sicht eines Passagiers in einen Bereich zwischen zwei parallel verlaufenden Trennelementen. Vorzugsweise ist die Abdeckeinheit fest mit dem Abschlusselement verbunden. Besonders bevorzugt ist die Abdeckeinheit teleskopartig ausgebildet. Durch diese Ausgestaltung kann ein Passagier vorteilhaft nicht in den Bereich zwischen zwei Trennelementen hineingreifen und sich insbesondere vorteilhaft nicht an der Führungseinheit verletzten. Zudem kann ein Gegenstand und/oder ein Schmutz vorteilhaft nicht in den Bereich zwischen zwei Trennelementen fallen. Vorteilhaft wird dadurch eine hohe Betriebssicherheit der Trenneinheit ermöglicht.

Ferner wird vorgeschlagen, dass die Trenneinheit zumindest eine Überlasteinheit aufweist, die zumindest dazu vorgesehen ist, die Trenneinheit zumindest in einem Überlastfall, insbesondere Crashfall, selbsttätig in einen geöffneten Zustand zu versetzen. Unter einer "Überlasteinheit" soll insbesondere eine Einheit verstanden werden, die einen Überlastfall selbsttätig sensiert und zumindest eine für einen Überlastfall definierte Handlung selbsttätig ausführt. Unter einem "Überlastfall" soll insbesondere ein Fall verstanden werden, bei dem die auf die Trenneinheit wirkenden Kräfte einen zulässigen Wert überschreiten. Vorzugsweise tritt ein Überlastfall bei einem Crashfall ein. Grundsätzlich kann ein Überlastfall auch bei einer Berührung der Trenneinheit eintreten, wobei durch die Berührung Kräfte auf die Trenneinheit wirken, die eine Beschädigung und/oder Zerstörung der Trenneinheit zur Folge hätten. Durch die Überlasteinheit wird vorteilhaft eine hohe Betriebssicherheit der Trenneinheit gewährleistet.

Zudem wird vorgeschlagen, dass die Trenneinheit zumindest eine Sollbruchstelle aufweist, die in einem Notfall, insbesondere Crashfall, dazu vorgesehen ist, die Trenneinheit zumindest teilweise in einen geöffneten Zustand zu versetzen. Unter einer "Sollbruchstelle" soll insbesondere eine Stelle in einem Bauteil verstanden werden, die so ausgelegt ist, dass das Bauteil bei einer definierten Krafteinwirkung vorrangig an dieser Stelle versagt. Die Sollbruchstelle ist vorzugsweise dazu vorgesehen, dass durch eine Zerstörung der Trenneinheit an der Sollbruchstelle wenigstens ein Passagier in einem Notfall aus dem Sitzbereich gelangen kann oder dass wenigstens ein Passagier und/oder Besatzungsmitglied in einem Notfall in den Sitzbereich gelangen kann. Vorzugsweise ist die Sollbruchstelle als eine Naht ausgebildet. Dadurch kann sich der Passagier in einem Notfall vorteilhaft selbst unter geringer Krafteinwirkung aus dem Sitzbereich befreien, insbesondere bei einer Evakuierung des Flugzeugs. Dies ist besonders vorteilhaft, da insbesondere in einem Crashfall aufgrund möglicher plastischer Verformungen nicht gewährleistet ist, dass die Trenneinheit ordnungsgemäß in einen vollständig geöffneten Zustand überführt werden kann.

Des Weiteren wird vorgeschlagen, dass das Trennelement zumindest in einem geschlossenen Zustand wenigstens eine verschließbare Öffnung zwischen dem Sitzbereich und dem Rest einer Kabine aufweist. Die Öffnung ist vorzugsweise dazu vorgesehen, als eine Durchreiche zwischen dem Sitz und dem Gang genutzt zu werden. Dadurch kann die Besatzung vorteilhaft einfach eine Bedienung des Passagiers, insbesondere eine Reichung eines Getränkes und/oder eines kleinen Gegenstandes, durchführen ohne die Trenneinheit in einen geöffneten Zustand versetzen zu müssen.

Ferner wird ein Flugzeugsitzmodul mit einer erfindungsgemäßen Flugzeugsitzvorrichtung vorgeschlagen. Unter einem "Flugzeugsitzmodul" soll insbesondere ein Zusammenbau aus dem Flugzeugsitz, der Umhausung und der Trenneinheit verstanden werden. Grundsätzlich kann das Flugzeugsitzmodul auch wenigstens einen Ottoman, wenigstens eine Konsole, wenigstens ein Staufach, wenigstens einen Tisch und/oder wenigstens einen Bildschirm aufweisen. Vorzugsweise bildet das Flugzeugsitzmodul den Sitzbereich aus. Dadurch kann vorteilhaft ein Flugzeugsitzmodul mit einem hohen Komfort und einer hohen Privatsphäre bereitgestellt werden.

Zudem wird eine Trenneinheit einer erfindungsgemäßen Flugzeugsitzvorrichtung vorgeschlagen. Vorzugsweise ist die Trenneinheit dazu geeignet, nachrüstbar an einer Umhausung für einen Flugzeugsitz angeordnet zu werden. Dadurch kann vorteilhaft ein Komfort und eine Privatsphäre für einen Passagier, insbesondere bei einem bestehenden Flugzeugsitz ohne eine Trenneinheit, erhöht werden.

Die erfindungsgemäße Flugzeugsitzvorrichtung soll hierbei nicht auf die oben beschriebene Anwendung und Ausführungsform beschränkt sein. insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

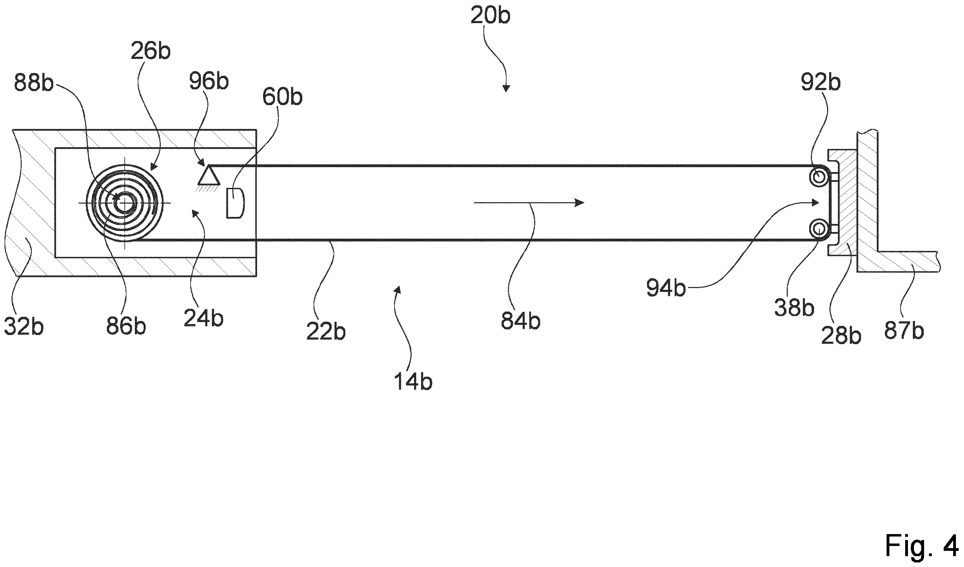

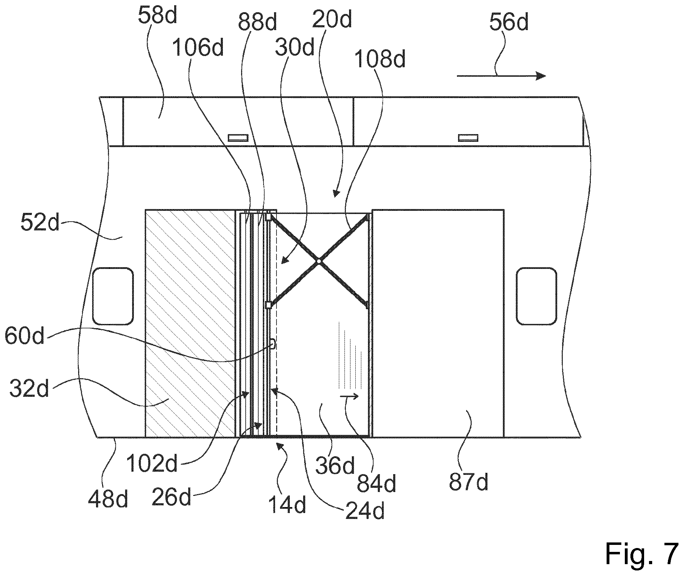

Weitere Vorteile ergeben sich aus der folgenden Zeichnungsbeschreibung. In den Zeichnungen sind drei Ausführungsbeispiele der Erfindung (Fig. 7-9, 17 und 18) und zehn nicht erfindungsgemäße Ausführungsbeispiele (Fig. 4-6 und 10-16) dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Darstellung eines Teils eines Flugzeugs mit einer Kabine und einer Flugzeugsitzvorrichtung in einem ersten Ausführungsbeispiel,
- Fig. 2: eine schematische Draufsicht auf einen Ausschnitt aus der Kabine mit einer Flugzeugsitzvorrichtung in dem erster Ausführungsbeispiel,
- Fig. 3: eine schematische Seitenansicht auf einen Ausschnitt aus der Kabine mit einer Flugzeugsitzvorrichtung in dem erster Ausführungsbeispiel
- Fig. 4: eine schematische Schnittansicht der Trenneinheit in einer Blickrichtung entlang einer Ausziehrichtung eines Trennelements in einem nicht erfindungsgemäßen zweiten Ausführungsbeispiel,
- Fig. 5: eine schematische Schnittansicht der Trenneinheit in einer Blickrichtung entlang der Ausziehrichtung des Trennelements in dem zweiten Ausführungsbeispiel,
- Fig. 6: eine schematische Seitenansicht auf einen Ausschnitt aus der Kabine mit einer nicht erfindungsgemäßen Flugzeugsitzvorrichtung in einem dritten Ausführungsbeispiel,
- Fig. 7: eine schematische Seitenansicht auf einen Ausschnitt aus der Kabine mit einer erfindungsgemäßen Flugzeugsitzvorrichtung in einem vierten Ausführungsbeispiel, wobei eine Umhausung und die Trenneinheit in einer schematischen Schnittansicht dargestellt sind,
- Fig. 8: eine schematische Schnittansicht der Trenneinheit und von einem Teil der Umhausung in einer Draufsicht für das vierte Ausführungsbeispiel,
- Fig. 9: eine schematische Seitenansicht auf einen Ausschnitt aus der Kabine mit einer erfindungsgemäßen Flugzeugsitzvorrichtung in einem fünften Ausführungsbeispiel,
- Fig. 10: eine schematische Seitenansicht auf einen Ausschnitt aus der Kabine mit einer nicht erfindungsgemäßen Flugzeugsitzvorrichtung in einem sechster Ausführungsbeispiel,
- Fig. 11: eine schematische Seitenansicht auf einen Ausschnitt aus der Kabine mit einer nicht erfindungsgemäßen Flugzeugsitzvorrichtung in einem siebten Ausführungsbeispiel,
- Fig. 12: eine schematische Seitenansicht auf einen Ausschnitt aus der Kabine mit einer nicht erfindungsgemäßen Flugzeugsitzvorrichtung in einem achten Ausführungsbeispiel,
- Fig. 13: eine schematische Seitenansicht auf einen Ausschnitt aus der Kabine mit einer nicht erfindungsgemäßen Flugzeugsitzvorrichtung in einem neunten Ausführungsbeispiel,
- Fig. 14: eine schematische Seitenansicht auf einen Ausschnitt aus der Kabine mit einer nicht erfindungsgemäßen Flugzeugsitzvorrichtung in einem zehnten Ausführungsbeispiel,
- Fig. 15: eine schematische Seitenansicht auf einen Ausschnitt aus der Kabine mit einer nicht erfindungsgemäßen Flugzeugsitzvorrichtung in einem elften Ausführungsbeispiel,
- Fig. 16: eine schematische Seitenansicht auf einen Ausschnitt aus der Kabine mit einer nicht erfindungsgemäßen Flugzeugsitzvorrichtung in einem zwölfter Ausführungsbeispiel,
- Fig. 17: eine schematische Draufsicht auf einen Ausschnitt aus der Kabine mit einer erfindungsgemäßen Flugzeugsitzvorrichtung in einem dreizehnten Ausführungsbeispiel und
- Fig. 18: eine schematische Seitenansicht auf einen Ausschnitt aus der Kabine mit einer erfindungsgemäßen Flugzeugsitzvorrichtung in dem dreizehnten Ausführungsbeispiel.

### Beschreibung der Ausführungsbeispiele

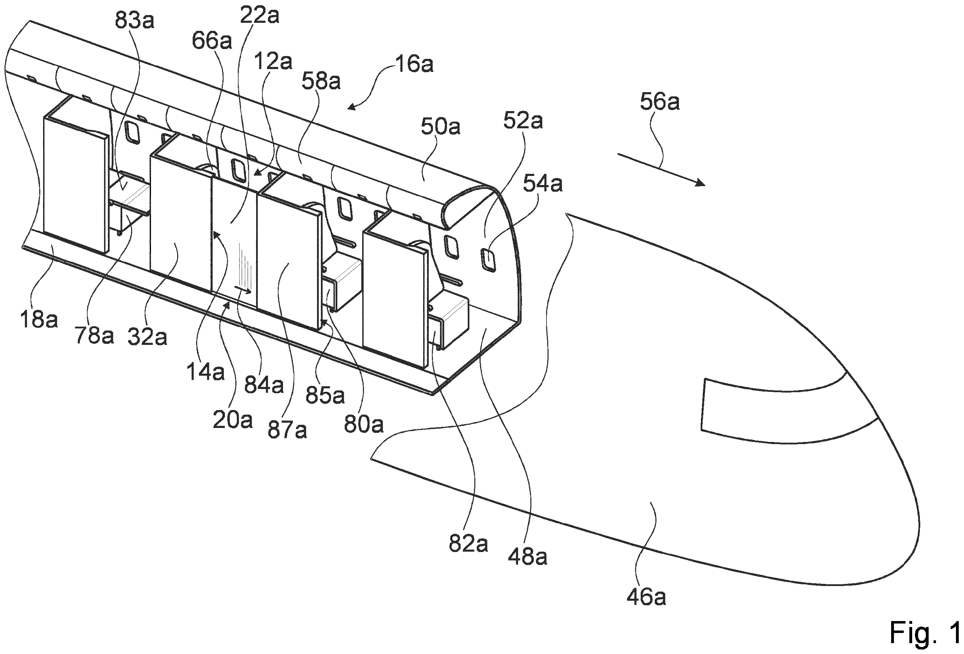

In den Figuren 1 bis 3 ist ein erstes Ausführungsbeispiel einer Flugzeugsitzvorrichtung gezeigt. Die Figur 1 zeigt ein Flugzeug 46a mit einer Kabine 16a. Die Kabine 16a ist aus Gründen der Übersichtlichkeit lediglich teilweise dargestellt. Die Kabine 16a weist einen Kabinenboden 48a auf. Die Kabine 16a weist eine Kabinendecke 50a auf. Die Kabinendecke 50a ist aus Gründen der Übersichtlichkeit lediglich teilweise dargestellt. Die Kabine 16a weist zumindest eine Kabinenwand 52a auf. Die Kabine 16a weist mehrere Flugzeugfenster auf, wovon ein Flugzeugfenster 54a exemplarisch mit einem Bezugszeichen versehen ist. Die Kabine 16a weist einen Gang 18a auf. Der Gang 18a verläuft parallel zu einer Längsrichtung 56a des Flugzeugs 46a. Der Gang 18a ist im vorliegenden Fall in einer Mitte der Kabine 16a angeordnet. Grundsätzlich kann die Kabine 16a auch mehr als einen Gang 18a aufweisen. Grundsätzlich kann der Gang 18a auch an einer anderen Stelle der Kabine 16a angeordnet sein. Die Kabine 16a weist im vorliegenden Fall mehrere Gepäckfächer auf, wobei ein Gepäckfach 58a exemplarisch mit einem Bezugszeichen versehen ist.

In der Kabine 16a ist die zumindest eine Flugzeugsitzvorrichtung angeordnet. Im vorliegenden Fall sind in der Kabine 16a exemplarisch mehrere identische Flugzeugsitzvorrichtungen angeordnet. Die Flugzeugsitzvorrichtungen sind in der Längsrichtung 56a des Flugzeugs 46a betrachtet hintereinander angeordnet. Die Flugzeugsitzvorrichtungen sind jeweils als ein Kabinenelement ausgebildet. Grundsätzlich ist auch eine andere, insbesondere verschachtelte, Anordnung der Flugzeugsitzvorrichtungen denkbar.

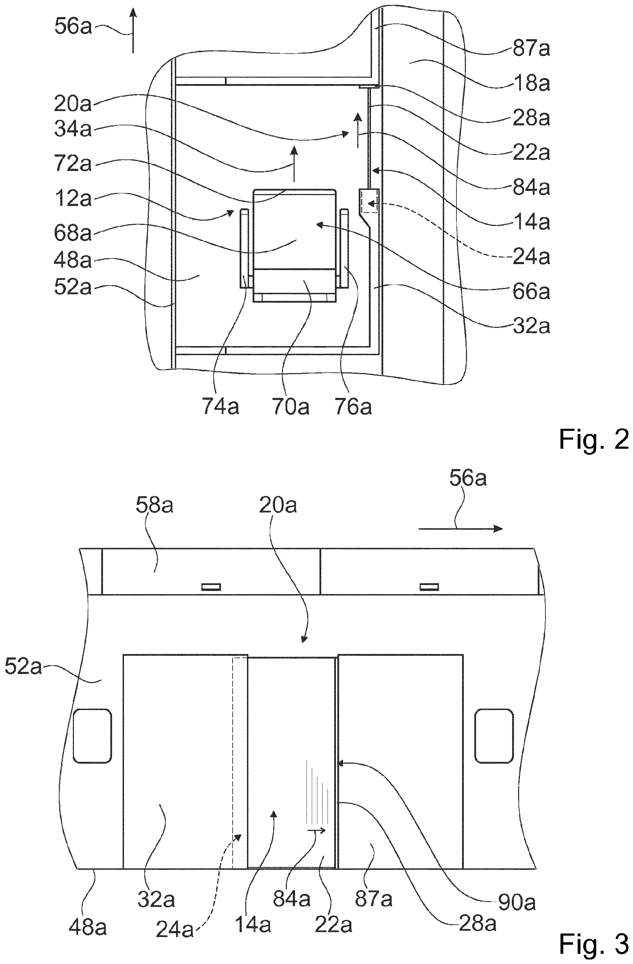

Die Figur 2 zeigt eine Draufsicht auf einen Ausschnitt der Kabine 16a. Die Flugzeugsitzvorrichtung weist einen Sitzbereich 12a auf. Grundsätzlich kann die Flugzeugsitzvorrichtung auch mehr als einen Sitzbereich 12a aufweisen. Der Sitzbereich 12a ist insbesondere als ein Teilbereich der Kabine 16a ausgebildet. Der Sitzbereich 12a grenzt an den Gang 18a der Kabine 16a an. Das optionale Gepäckfach 58a ist über dem Sitzbereich 12a an der Kabinendecke 50a angeordnet.

Die Flugzeugsitzvorrichtung weist einen Flugzeugsitz 66a auf. Der Flugzeugsitz 66a ist in dem Sitzbereich 12a angeordnet. Grundsätzlich kann die Flugzeugsitzvorrichtung auch mehrere Flugzeugsitze aufweisen. Der Flugzeugsitz 66a weist einen Sitzboden 68a auf.

Der Flugzeugsitz 66a weist eine Rückenlehne 70a auf. Der Flugzeugsitz 66a weist eine Beinstütze 72a auf. Der Flugzeugsitz 66a weist zwei Armlehnen 74a, 76a auf. Der Flugzeugsitz 66a ist im vorliegenden Fall als ein Full-flat Flugzeugsitz ausgebildet, der in zumindest einem Zustand eine zumindest im Wesentlichen ebene Liegefläche ausbildet. Die Flugzeugsitzvorrichtungen weisen jeweils einen identisch zu dem Flugzeugsitz 66a ausgebildeten Flugzeugsitz 78a, 80a, 82a auf (Figur 1). Die Flugzeugsitze 66a, 80a, 82a sind in einer Sitzposition dargestellt, wohingegen der Flugzeugsitz 78a in einer Liegeposition dargestellt ist. Der Flugzeugsitz 78a bildet eine Liegefläche 83a aus. Der Flugzeugsitz 66a weist eine Sitzrichtung 34a auf. Im vorliegenden Fall ist die Sitzrichtung 34a parallel zu der Längsrichtung 56a des Flugzeugs 46a angeordnet. Grundsätzlich wäre es aber auch denkbar, dass die Sitzrichtung 34a einen Winkel zu der Längsrichtung 56a des Flugzeugs 46a aufweist, wobei die Sitzrichtung 34a parallel zu dem Kabinenboden 48a ausgebildet ist. Die Sitzrichtung 34a kann insbesondere auch entgegen der Längsrichtung 56a des Flugzeugs 46a ausgerichtet sein.

In dem Sitzbereich 12a sind vorzugsweise weitere nicht näher dargestellte Elemente angeordnet, die von einem Passagier nutzbar sind, wie insbesondere eine Konsole, ein Ottoman, Verstaumöglichkeiten, Ablageelemente und/oder Entertainmentvorrichtungen. Die Flugzeugsitzvorrichtung bildet mit zumindest einem dieser Elemente ein Flugzeugsitzmodul aus.

Die Flugzeugsitzvorrichtung weist eine Umhausung 32a auf. Grundsätzlich kann die Umhausung 32a auch mehrteilig ausgebildet sein. Die Umhausung 32a umgibt den Sitzbereich 12a zumindest teilweise, in einer Sitzrichtung 34a betrachtet, hinter dem Sitzbereich 12a. Die Umhausung 32a ist im vorliegenden Fall in der Sitzrichtung 34a betrachtet hinter dem Flugzeugsitz 66a und rechts neben dem Flugzeugsitz 66a angeordnet. Die Umhausung 32a bildet einen Teil einer Begrenzung des Sitzbereiches 12a auf dem Kabinenboden 48a aus. Die Umhausung 32a weist ein oberstes Ende auf, an dem die Umhausung 32a die größte Entfernung orthogonal zu dem Kabinenboden 48a aufweist. Eine weitere Flugzeugsitzvorrichtung weist eine zu der Umhausung 32a identische Umhausung 87a auf. Die Umhausung 87a ist in einer Sitzrichtung 34a betrachtet vor dem Flugzeugsitz 66a angeordnet. Die Umhausung 87a bildet einen Teil der Begrenzung des Sitzbereiches 12a auf dem Kabinenboden 48a aus. Die Umhausung 87a ist als ein Kabinenelement ausgebildet.

Die Flugzeugsitzvorrichtung weist einen Durchgangsbereich 20a auf. Der Durchgangsbereich 20a ist in der Längsrichtung 56a des Flugzeugs 46a durch die Umhausung 32a und durch die Umhausung 87a begrenzt. Durch den Durchgangsbereich 20a ist der Sitzbereich 12a zugänglich. Der Durchgangsbereich 20a ist zwischen dem Sitzbereich 12a und dem Gang 18a angeordnet. Der Durchgangsbereich 20a erstreckt sich von dem Kabinenboden 48a bis zu der Kabinendecke 50a. Über den Durchgangsbereich 20a ist der Flugzeugsitz 66a von dem Gang 18a erreichbar. Grundsätzlich sind auch mehrere in dem Sitzbereich 12a angeordnete Flugzeugsitze über den Durchgangsbereich 20a erreichbar. Grundsätzlich wäre jedoch auch denkbar, dass der Sitzbereich 12a zwei Durchgangsbereiche aufweist, die jeweils zwischen dem Sitzbereich 12a und unterschiedlichen Gängen angeordnet sind.

Die Flugzeugsitzvorrichtung weist eine zwischen einem geöffneten Zustand und einem geschlossenen Zustand verstellbare Trenneinheit 14a auf (Figur 1). Grundsätzlich wäre jedoch auch denkbar, dass die Flugzeugsitzvorrichtung mehr als eine Trenneinheit 14a aufweist. Die Trenneinheit 14a ist in der Umhausung 32a angeordnet. Die Trenneinheit 14a ist dazu vorgesehen, den zumindest einen Sitzbereich 12a in zumindest einem Betriebszustand zumindest teilweise von einem Rest der Kabine 16a, insbesondere von dem Gang 18a der Kabine 16a, abzutrennen. Die Trenneinheit 14a weist zumindest einen geöffneten Zustand und einen geschlossenen Zustand auf. Die Trenneinheit 14a ist zwischen dem geöffneten Zustand und dem geschlossenen Zustand verstellbar. Die Trenneinheit 14a kann zusätzlich in zumindest einer Zwischenstellung zwischen dem geöffneten Zustand und dem geschlossenen Zustand gehalten werden. Die Trenneinheit 14a ist dazu vorgesehen, den Durchgangsbereich 20a in ihrem geschlossenen Zustand vollständig zu verschließen. Die Trenneinheit 14a trennt den Sitzbereich 12a in dem geschlossenen Zustand in einer Höhe von dem Kabinenboden 48a bis zu dem obersten Ende der Umhausung 32a vollständig physisch und optisch von dem Gang 18a der Kabine 16a ab. Die Trenneinheit 14a versperrt in dem geschlossenen Zustand einen Durchgang zwischen dem Sitzbereich 12a und dem Gang 18a. Die Trenneinheit 14a trennt den Sitzbereich 12a in dem geschlossenen Zustand in einer Höhe von dem Kabinenboden 48a bis zu dem obersten Ende der Umhausung 32a komplett blickdicht von dem Gang 18a der Kabine 16a ab. Der Durchgangsbereich 20a ist in dem geschlossenen Zustand teilweise durch die Trenneinheit 14a verschlossen. Der Durchgangsbereich 20a ist in einem Bereich zwischen der Umhausung 32a und der Kabinendecke 50a in dem geschlossenen Zustand nicht durch die Trenneinheit 14a verschlossen. Die Trenneinheit 14a ist in dem geöffneten Zustand vollständig geöffnet. In dem geöffneten Zustand ragt die Trenneinheit 14a nicht in den Durchgangsbereich 20a. Die weitere Flugzeugsitzvorrichtung weist eine mit der Trenneinheit 14a identisch ausgebildete Trenneinheit 85a auf. Die Trenneinheit 14a ist in einem vollständig geschlossenen Zustand dargestellt. Die Trenneinheit 85a ist in einem vollständig geöffneten Zustand dargestellt. Grundsätzlich wäre es auch denkbar, dass sich die Trenneinheit 14a in dem geschlossenen Zustand von einer Liegefläche des Flugzeugsitzes 66a bis zu dem obersten Ende der Umhausung 32a in den Durchgangsbereich 20a erstreckt. Die Trenneinheit 14a ist so ausgebildet, dass die Trenneinheit 14a für eine Flugzeugsitzvorrichtung nachrüstbar ist.

Die Trenneinheit 14a weist zumindest eine nicht näher dargestellte Überlasteinheit auf. Die Überlasteinheit ist zumindest dazu vorgesehen, die Trenneinheit 14a zumindest in einem Überlastfall, insbesondere Crashfall, selbsttätig in einen geöffneten Zustand zu versetzen. Vorzugsweise tritt ein Überlastfall bei einem Crashfall ein. Grundsätzlich kann ein Überlastfall auch bei einer Berührung der Trenneinheit 14a eintreten, wobei durch die Berührung Kräfte auf die Trenneinheit 14a wirken, die eine Beschädigung und/oder Zerstörung der Trenneinheit 14a zur Folge hätten.

Die Trenneinheit 14a weist zumindest eine nicht näher dargestellte Sollbruchstelle auf. Die Sollbruchstelle ist in einem Notfall, insbesondere Crashfall, dazu vorgesehen, die Trenneinheit 14a zumindest teilweise in einen geöffneten Zustand zu versetzen. Die Sollbruchstelle ist dazu vorgesehen, dass durch eine Zerstörung der Trenneinheit 14a an der Sollbruchstelle wenigstens ein Passagier in einem Notfall aus dem Sitzbereich 12a gelangen kann oder dass wenigstens ein Passagier und/oder ein Besatzungsmitglied in einem Notfall in den Sitzbereich 12a gelangen kann. Vorzugsweise ist die Sollbruchstelle als eine Naht ausgebildet.

Die Figur 3 zeigt eine schematische Seitenansicht auf einen Ausschnitt aus der Kabine 16a mit einer Flugzeugsitzvorrichtung. Die Trenneinheit 14a weist ein ausziehbares Trennelement 22a auf. Das Trennelement 22a weist eine Ausziehrichtung 84a auf. Das Trennelement 22a weist eine eingefahrene Stellung und zumindest eine ausgefahrene Stellung auf. Das Trennelement 22a ist aus einer zusammenhängenden Konstruktion gebildet. Das Trennelement 22a ist aus einem Rollo gebildet. Grundsätzlich kann das Trennelement 22a auch aus einem Plissee, einer Jalousie oder einem Rollladen gebildet sein.

Das Trennelement 22a ist zumindest im Wesentlichen aus einem biegeschlaffen Material, insbesondere einem Textil, einem Leder und/oder einer Folie, gebildet. Das biegeschlaffe Material ist als ein Textil, insbesondere als ein Stoff, ein Leder und/oder eine Folie ausgebildet. Das biegeschlaffe Material ist brandhemmend ausgebildet. Grundsätzlich kann das Trennelement 22a auch aus mehreren Lamellenelementen gebildet sein. Vorzugsweise besteht das Trennelement 22a zumindest teilweise aus einem Material mit einer veränderbaren Lichtdurchlässigkeit. Vorzugsweise ist das Trennelement 22a zumindest teilweise beleuchtet.

Das Trennelement 22a ist zumindest im Wesentlichen in horizontaler Richtung ausziehbar. Die Ausziehrichtung 84a entspricht zumindest im Wesentlichen der horizontalen Richtung. Das Trennelement 22a ist zumindest von einem Passagier ausziehbar. Das Trennelement 22a ist von der eingefahrenen Stellung in die ausgefahrene Stellung überführbar. Das Trennelement 22a ist von der ausgefahrenen Stellung in die eingefahrene Stellung überführbar.

Die Trenneinheit 14a weist eine Verstaueinheit 24a auf. Grundsätzlich wäre auch denkbar, dass die Trenneinheit 14a mehrere Verstaueinheiten aufweist. Die Verstaueinheit 24a ist in dem geöffneten Zustand dazu vorgesehen, das Trennelement 22a zumindest im Wesentlichen zu verstauen. Die Verstaueinheit 24a ist quaderförmig ausgebildet. Grundsätzlich kann die Verstaueinheit 24a jedoch auch eine andere Form aufweisen. Die Verstaueinheit 24a ist dazu vorgesehen, das Trennelement 22a in der eingefahrenen Stellung vollständig aufzunehmen. Die Verstaueinheit 24a ist in einem geöffneten Zustand der Trenneinheit 14a außerhalb des Durchgangsbereichs 20a angeordnet. Die Verstaueinheit 24a ist dazu vorgesehen, dass das Trennelement 22a in der eingefahrenen Stellung für einen Passagier unsichtbar ist. Vorzugsweise weist die Verstaueinheit 24a zumindest ein Gehäuse auf. Die Verstaueinheit 24a ist vollständig in der Umhausung 32a angeordnet. Die Verstaueinheit 24a umfasst eine Rückholeinheit 26a. Die Rückholeinheit 26a ist dazu vorgesehen, das Trennelement 22a in zumindest einem Betriebszustand zurückzuholen. Die Rückholeinheit 26a weist zumindest ein Federelement 86a auf. Das Federelement 86a ist als eine Spiralfeder ausgebildet. Das Federelement 86a ist insbesondere dazu vorgesehen, eine Zugkraft auf das Trennelement 22a auszuüben. Die Rückholeinheit 26a ist drehbar um eine Drehachse 88a gelagert.

Die Trenneinheit 14a weist ein Abschlusselement 28a auf. Grundsätzlich wäre jedoch auch denkbar, dass die Trenneinheit 14a mehr als ein Abschlusselement aufweist. Das Abschlusselement 28a ist zur Befestigung des Trennelements 22a an der Umhausung 87a vorgesehen. Das Abschlusselement 28a ist plattenförmig ausgebildet. Das Abschlusselement 28a ist in einer Haupterstreckungsrichtung des Abschlusselements 28a orthogonal zu dem Kabinenboden 48a ausgerichtet. Das Abschlusselement 28a liegt in der vollständig ausgefahrenen Stellung des Trennelements 22a an der Umhausung 87a an. Das Trennelement 22a ist mit dem Abschlusselement 28a zumindest an einem Ende 90a des Trennelements 22a fest verbunden. Vorzugsweise ist das Trennelement 22a mit einem nicht näher dargestellten Keder formschlüssig mit dem Abschlusselement 28a verbunden. Das Abschlusselement 28a ist so ausgebildet, dass es mit einem nicht näher dargestellten Rastelement koppelbar ist. Das Rastelement ist an der Umhausung 87a angeordnet. Alternativ oder zusätzlich weist das Abschlusselement 28a ein nicht näher dargestelltes Magnetelement auf, das in einem vollständig geschlossenen Zustand der Trenneinheit 14a dazu vorgesehen ist, mit einem an der Umhausung 87a angeordneten weiteren Magnetelement gekoppelt zu werden. Das Abschlusselement 28a umfasst zumindest ein nicht näher dargestelltes Bedienelement. Das Bedienelement ist insbesondere dazu vorgesehen, das Trennelement 22a zwischen zwei Betriebszuständen zu bewegen. Das zumindest eine Bedienelement ist insbesondere als ein Griff, eine Taste oder ein Sensor ausgebildet.

Die Trenneinheit 14a weist zumindest eine nicht näher dargestellte Verriegelungseinheit auf. Mittels der Verriegelungseinheit ist die Trenneinheit 14a zumindest in ihrem geschlossenen Zustand verriegelbar ausgebildet. Eine Verriegelung kann automatisch und/oder durch eine Betätigung des zumindest einen Bedienelements an dem Abschlusselement 28a erfolgen. Eine Entriegelung der Verriegelungseinheit kann automatisch und/oder durch eine Betätigung des zumindest einen Bedienelements an dem Abschlusselement 28a erfolgen. Die Verriegelungseinheit weist zumindest ein Verriegelungselement auf. Das Verriegelungselement ist dazu vorgesehen, mit dem Abschlusselement 28a gekoppelt zu werden, um das Trennelement 22a an der Umhausung 87a zu befestigen. Das Verriegelungselement ist im vorliegenden Fall als das Rastelement ausgebildet, das mit dem Abschlusselement 28a koppelbar ist.

Die Trenneinheit 14a weist eine nicht näher dargestellte TTL-Funktion auf. Die TTL-Funktion ist dazu vorgesehen, die Trenneinheit 14a automatisch oder teilautomatisch in den geöffneten Zustand zu überführen. Die TTL-Funktion ist dazu vorgesehen automatisch und/oder durch Steuerung einer Besatzung des Flugzeugs 46a aktiviert und/oder deaktiviert zu werden. Die TTL-Funktion kann als ein Computerprogramm zur Ansteuerung eines Elektromotors oder einer Formgedächtnislegierung und/oder als eine Mechanik ausgebildet sein.

In den Figuren 4 bis 18 sind drei Ausführungsbeispiele der Erfindung und neun weitere, nicht erfindungsgemäße Ausführungsbeispiele gezeigt. Die nachfolgenden Beschreibungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 18 ist der Buchstabe a durch die Buchstaben b bis m ersetzt.

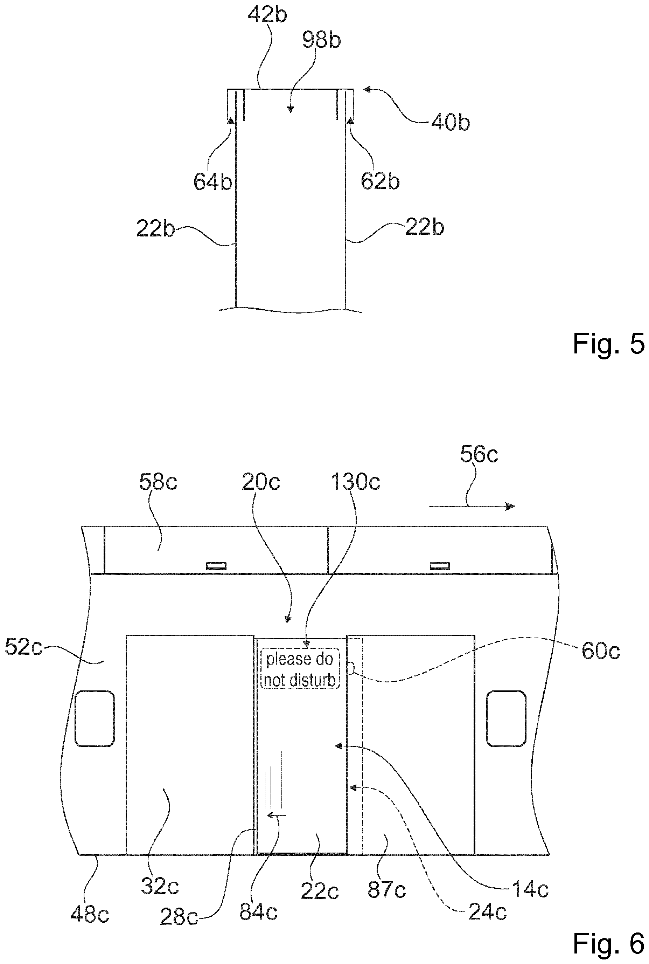

Die Figuren 4 und 5 zeigen eine nicht erfindungsgemäße Flugzeugsitzvorrichtung in einem zweiter Ausführungsbeispiel. Eine Kabine 16b weist einen Kabinenboden 48b auf. Die Kabine 16b weist eine Kabinenwand 52b auf. Die Kabine 16b weist einen Gang 18b auf. Die Kabine 16b weist zumindest ein Gepäckfach 58b auf. In der Kabine 16b ist eine Flugzeugsitzvorrichtung angeordnet. Die Flugzeugsitzvorrichtung weist einen Sitzbereich 12b auf. Der Sitzbereich 12b grenzt an den Gang 18b der Kabine 16b an. Die Flugzeugsitzvorrichtung weist einen Flugzeugsitz 66b auf. Die Flugzeugsitzvorrichtung weist eine Umhausung 32b auf. Die Flugzeugsitzvorrichtung weist einen Durchgangsbereich 20b auf. Die Flugzeugsitzvorrichtung weist eine zwischen einem geöffneten Zustand und einem geschlossenen Zustand verstellbare Trenneinheit 14b auf. Die Trenneinheit 14b weist ein ausziehbares Trennelement 22b auf. Das Trennelement 22b weist eine eingefahrene Stellung und zumindest eine ausgefahrene Stellung auf. Das Trennelement 22b ist aus einem Rollo gebildet. Das Trennelement 22b ist zumindest im Wesentlichen aus einem biegeschlaffen Material, insbesondere einem Textil, einem Leder und/oder einer Folie, gebildet. Das Trennelement 22b ist zumindest im Wesentlichen in horizontaler Richtung ausziehbar. Das Trennelement 22b weist eine Ausziehrichtung 84b auf. Die Ausziehrichtung 84b entspricht zumindest im Wesentlichen der horizontalen Richtung. Die Trenneinheit 14b weist eine Verstaueinheit 24b auf. Die Verstaueinheit 24b umfasst eine Rückholeinheit 26b. Die Trenneinheit 14b weist ein Abschlusselement 28b auf. In einer Längsrichtung 56b eines Flugzeugs 46b betrachtet, ist vor der Flugzeugsitzvorrichtung eine weitere Flugzeugsitzvorrichtung mit einer Umhausung 87b angeordnet. Das Abschlusselement 28b kontaktiert die Umhausung 87b in einem vollständig geöffneten Zustand. Die Figur 4 zeigt eine Schnittansicht der Trenneinheit 14b und von einem Teil der Umhausung 32b in einer Draufsicht. Die Trenneinheit 14b weist ein Umlenkelement 38b auf. Die Trenneinheit 14b weist ein weiteres Umlenkelement 92b auf. Das Umlenkelement 38b ist in einem Bereich 94b des Abschlusselements 28b angeordnet. Das weitere Umlenkelement 92b ist in dem Bereich 94b des Abschlusselements 28b angeordnet. Das Umlenkelement 38b ist zumindest dazu vorgesehen, das Trennelement 22b umzulenken. Das weitere Umlenkelement 92b ist zumindest dazu vorgesehen, das Trennelement 22b umzulenken. Grundsätzlich wäre es jedoch auch denkbar, dass die Trenneinheit 14b lediglich ein Umlenkelement aufweist. Das Umlenkelement 38b ist als eine Umlenkrolle ausgebildet. Das weitere Umlenkelement 92b ist als eine weitere Umlenkrolle ausgebildet. Das Umlenkelement 38b ist drehbar gelagert ausgebildet. Das weitere Umlenkelement 92b ist drehbar gelagert ausgebildet. Das Umlenkelement 38b ist fest mit dem Abschlusselement 28b verbunden. Das weitere Umlenkelement 92b ist fest mit dem Abschlusselement 28b verbunden. Das Trennelement 22b ist an einem Ende 96b zumindest im Wesentlichen fest mit der Verstaueinheit 24b verbunden. Die Trenneinheit 14b weist eine Beleuchtungseinheit 60b auf. Grundsätzlich kann die Trenneinheit 14b auch mehr als eine Beleuchtungseinheit 60b aufweisen. Das Trennelement 22b ist zumindest teilweise von innen beleuchtet. Die Beleuchtungseinheit 60b ist dazu vorgesehen, das Trennelement 22b von innen zu beleuchten. Die Beleuchtungseinheit 60b ist dazu vorgesehen, ein Bild und/oder einen Text auf das Trennelement 22b zu projizieren. Dadurch kann vorteilhaft eine Nachricht von einem Passagier an eine Besatzung des Flugzeugs 46b und/oder eine Nachricht von einer Besatzung des Flugzeugs 46b an einen Passagier übermittelt werden. Eine Nachricht kann beispielsweise als Hinweis "Please do not disturb!" oder "Crew announcement!" ausgestaltet sein. Grundsätzlich kann die Nachricht auch als Sitzplatznummer, beispielsweise "3A", des Flugzeugsitzes 66b ausgestaltet sein. Dadurch wird eine vorteilhaft diskrete und visuelle Kommunikation ermöglicht, welche einem Passagier eine hohe Privatsphäre bietet.

Die Figur 5 zeigt eine Schnittansicht der Trenneinheit 14b in einer Blickrichtung entlang der Ausziehrichtung 84b des Trennelements 22b für das zweite Ausführungsbeispiel. Die Trenneinheit 14b weist zumindest an einer Oberseite 40b wenigstens eine Abdeckeinheit 42b auf. Die Abdeckeinheit 42b ist zumindest in einem geschlossenen Zustand dazu vorgesehen, das Trennelement 22b zumindest im Wesentlichen zu überdecken. Die Abdeckeinheit 42b weist zwei Führungsbereiche 62b, 64b auf. Die Führungsbereiche 62b, 64b sind dazu vorgesehen, das Trennelement 22b in einer definierten Position zu halten. Die Abdeckeinheit 42b verhindert eine Sicht eines Passagiers in einen Bereich 98b zwischen zwei parallel verlaufenden umgelenkten Teilen des Trennelement 22b. Vorzugsweise ist die Abdeckeinheit 42b fest mit dem Abschlusselement 28b verbunden. Die Abdeckeinheit 42b ist teleskopartig und/oder aufrollbar ausgebildet. In dem Bereich 98b kann eine Beleuchtungseinheit und/oder eine Führungseinheit vorteilhaft untergebracht werden. Dies ermöglicht einen vorteilhaft hohen Komfort für einen Passagier, da lediglich eine Oberfläche des Trennelements 22b und die Abdeckeinheit 42b sichtbar sind.

Figur 6 zeigt eine nicht erfindungsgemäße Flugzeugsitzvorrichtung in einem dritten Ausführungsbeispiel. Eine Kabine 16c weist einen Kabinenboden 48c auf. Die Kabine 16c weist eine Kabinenwand 52c auf. Die Kabine 16c weist einen Gang 18c auf. Die Kabine 16c weist zumindest ein Gepäckfach 58c auf. In der Kabine 16c ist die zumindest eine Flugzeugsitzvorrichtung angeordnet. Die Flugzeugsitzvorrichtung weist einen Sitzbereich 12c auf. Der Sitzbereich 12c grenzt an den Gang 18c der Kabine 16c an. Die Flugzeugsitzvorrichtung weist einen Flugzeugsitz 66c auf. Die Flugzeugsitzvorrichtung weist eine Umhausung 32c auf. Die Flugzeugsitzvorrichtung weist einen Durchgangsbereich 20c auf. Die Flugzeugsitzvorrichtung weist eine zwischen einem geöffneten Zustand und einem geschlossenen Zustand verstellbare Trenneinheit 14c auf. Die Trenneinheit 14c weist ein ausziehbares Trennelement 22c auf. Das Trennelement 22c weist eine eingefahrene Stellung und zumindest eine ausgefahrene Stellung auf. Das Trennelement 22c ist aus einem Rollo gebildet. Das Trennelement 22c ist zumindest im Wesentlichen aus einem biegeschlaffen Material, insbesondere einem Textil, einem Leder und/oder einer Folie, gebildet. Das Trennelement 22c ist zumindest im Wesentlichen in horizontaler Richtung ausziehbar. Das Trennelement 22c weist eine Ausziehrichtung 84c auf. Die Ausziehrichtung 84c entspricht zumindest im Wesentlichen der horizontalen Richtung. Die Trenneinheit 14c weist eine Verstaueinheit 24c auf. Die Verstaueinheit 24c umfasst eine Rückholeinheit 26c. Die Trenneinheit 14c weist ein Abschlusselement 28c auf. In einer Längsrichtung 56c eines Flugzeugs 46c betrachtet, ist vor der Flugzeugsitzvorrichtung eine weitere Flugzeugsitzvorrichtung mit einer Umhausung 87c angeordnet. Die Figur 6 zeigt eine schematische Seitenansicht auf einen Ausschnitt aus der Kabine 16c. Die Ausziehrichtung 84c des Trennelements 22c ist entgegengesetzt zu der Längsrichtung 56c des Flugzeugs 46c. Die Verstaueinheit 24c ist an der weiteren Flugzeugsitzvorrichtung angeordnet. Die Verstaueinheit 24c ist in der Umhausung 87c angeordnet. Grundsätzlich kann jedes Ausführungsbeispiel der Flugzeugsitzvorrichtung an der Umhausung 87c angeordnet werden. Insbesondere in einem Crashfall kann die Trenneinheit 14c durch die in der Längsrichtung 56c des Flugzeugs 46c wirkenden Kräfte vorteilhaft in den geöffneten Zustand versetzt werden. Die Trenneinheit 14c weist eine Beleuchtungseinheit 60c auf. Die Beleuchtungseinheit 60c ist in der Verstaueinheit 24c angeordnet. Grundsätzlich kann die Beleuchtungseinheit 60c auch an dem Abschlusselement 28c angeordnet sein. Die Beleuchtungseinheit 60c ist dazu vorgesehen, eine Nachricht 130c auf das Trennelement 22c zu projizieren. Die Nachricht 130c ist im vorliegenden Fall von einem Passagier aus dem Sitzbereich 12c an eine Besatzung des Flugzeugs 46c übermittelbar. Die Nachricht 130c ist für einen Passagier in dem Sitzbereich 12c unsichtbar. Die Nachricht 130c ist von dem Gang 18c der Kabine 16c sichtbar. Die Nachricht 130c lautet im vorliegenden Fall "please do not disturb".

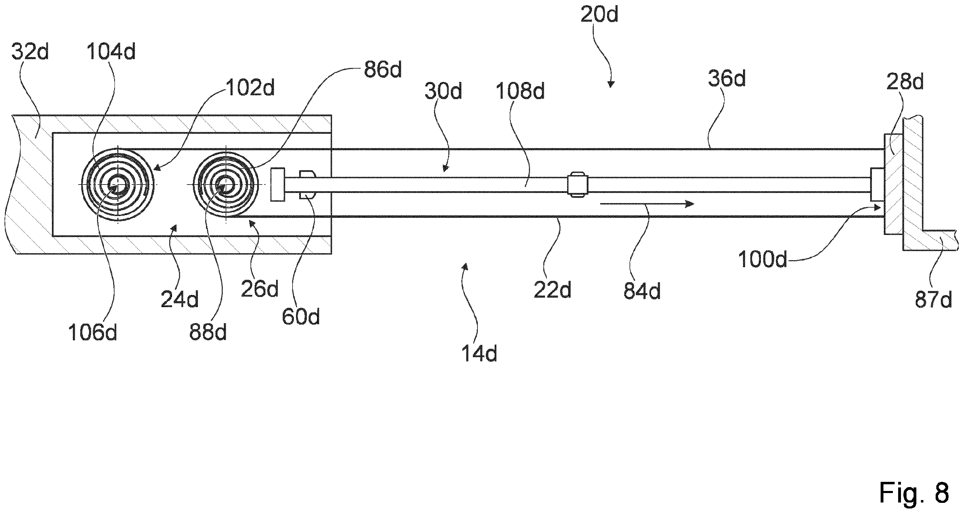

Die Figuren 7 und 8 zeigen eine erfindungsgemäße Flugzeugsitzvorrichtung in einem vierten Ausführungsbeispiel. Eine Kabine 16d weist einen Kabinenboden 48d auf. Die Kabine 16d weist eine Kabinenwand 52d auf. Die Kabine 16d weist einen Gang 18d auf. Die Kabine 16d weist zumindest ein Gepäckfach 58d auf. In der Kabine 16d ist eine erfindungsgemäße Flugzeugsitzvorrichtung angeordnet. Die Flugzeugsitzvorrichtung weist einen Sitzbereich 12d auf. Der Sitzbereich 12d grenzt an den Gang 18d der Kabine 16d an. Die Flugzeugsitzvorrichtung weist einen Flugzeugsitz 66d auf. Die Flugzeugsitzvorrichtung weist eine Umhausung 32d auf. Die Flugzeugsitzvorrichtung weist einen Durchgangsbereich 20d auf. Die Flugzeugsitzvorrichtung weist eine zwischen einem geöffneten Zustand und einem geschlossenen Zustand verstellbare Trenneinheit 14d auf. Die Trenneinheit 14d weist ein ausziehbares Trennelement 22d auf. Das Trennelement 22d weist eine eingefahrene Stellung und zumindest eine ausgefahrene Stellung auf. Das Trennelement 22d ist aus einem Rollo gebildet. Das Trennelement 22d ist zumindest im Wesentlichen aus einem biegeschlaffen Material, insbesondere einem Textil, einem Leder und/oder einer Folie, gebildet. Das Trennelement 22d ist zumindest im Wesentlichen in horizontaler Richtung ausziehbar. Das Trennelement 22d weist eine Ausziehrichtung 84d auf. Die Ausziehrichtung 84d entspricht zumindest im Wesentlichen der horizontalen Richtung. Die Trenneinheit 14d weist eine Verstaueinheit 24d auf. Die Verstaueinheit 24d umfasst eine Rückholeinheit 26d. Die Rückholeinheit 26d weist zumindest ein Federelement 86d auf. Die Trenneinheit 14d weist ein Abschlusselement 28d auf. In einer Längsrichtung 56d eines Flugzeugs 46d betrachtet, ist vor der Flugzeugsitzvorrichtung eine weitere Flugzeugsitzvorrichtung mit einer Umhausung 87d angeordnet. Das Abschlusselement 28d kontaktiert die Umhausung 87d in einem vollständig geöffneten Zustand.

Die Figur 7 zeigt eine schematische Seitenansicht auf einen Ausschnitt aus der Kabine 16d, wobei die Umhausung 32d und die Trenneinheit 14d in einer Schnittansicht dargestellt sind. Die Figur 8 zeigt eine Schnittansicht der Trenneinheit 14d und von einem Teil der Umhausung 32d in einer Draufsicht. Die Trenneinheit 14d weist ein weiteres Trennelement 36d auf, das zumindest im Wesentlichen parallel zu dem Trennelement 22d angeordnet ist. Das Trennelement 22d und das weitere Trennelement 36d sind an einem Ende 100d fest mit dem Abschlusselement 28d verbunden. Die Verstaueinheit 24d umfasst eine weitere Rückholeinheit 102d. Die weitere Rückholeinheit 102d ist dazu vorgesehen, das weitere Trennelement 36d in zumindest einem Betriebszustand zurückzuholen. Die weitere Rückholeinheit 102d weist zumindest ein weiteres Federelement 104d auf. Das weitere Federelement 104d ist als eine weitere Spiralfeder ausgebildet. Das weitere Federelement 104d ist insbesondere dazu vorgesehen, eine Zugkraft auf das weitere Trennelement 36d auszuüben. Die weitere Rückholeinheit 102d ist drehbar um eine weitere Drehachse 106d gelagert. Die Rückholeinheit 26d und die weitere Rückholeinheit 102d sind in der Ausziehrichtung 84d betrachtet hintereinander angeordnet. Die Trenneinheit 14d weist kein Umlenkelement auf. Grundsätzlich ist es auch denkbar, dass die Trenneinheit 14d lediglich eine Rückholeinheit aufweist und die Trennelemente 22d, 36d miteinander gekoppelt sind. Die Rückholeinheit 26d und/oder die Rückholeinheit 102d kann/können grundsätzlich auch aus einer Formgedächtnislegierung ausgebildet sein.

Die Trenneinheit 14d weist zumindest eine Führungseinheit 30d auf. Die Führungseinheit 30d ist zumindest dazu vorgesehen, das Trennelement 22d und/oder das Abschlusselement 28d in zumindest einem Betriebszustand zu führen und/oder zu fixieren. Die Führungseinheit 30d weist ein Scherenelement 108d auf. Das Scherenelement 108d ist an dem Abschlusselement 28d und in der Verstaueinheit 24d angeordnet. Grundsätzlich ist auch eine andere Anordnung des Scherenelements 108d denkbar. Die Führungseinheit 30d weist ein nicht näher dargestelltes Federelement auf. Das Federelement ist als eine Gasdruckfeder ausgebildet. Das Federelement der Führungseinheit 30d ist in zumindest einem Betriebszustand dazu vorgesehen, eine Kraft auf das Trennelement 22d und/oder das Abschlusselement 28d aufzubringen, um es von der eingefahrenen Stellung in die ausgefahrene Stellung und/oder von der ausgefahrenen Stellung in die eingefahrene Stellung zu überführen. Das Federelement der Führungseinheit 30d ist in zumindest einem Betriebszustand dazu vorgesehen, eine Kraft auf das Trennelement 22d und/oder das Abschlusselement 28d aufzubringen, um es in der eingefahrenen Stellung und/oder in einer ausgefahrenen Stellung zu fixieren. Die Führungseinheit 30d ist dazu vorgesehen, das Trennelement 22d in einer Stellung zwischen der eingefahrenen Stellung und der ausgefahrenen Stellung zu fixieren. Die Trenneinheit 14d weist eine Beleuchtungseinheit 60d auf. Die Beleuchtungseinheit 60d ist in der Verstaueinheit 24d angeordnet. Grundsätzlich kann die Beleuchtungseinheit 60d auch an dem Abschlusselement 28d angeordnet sein.

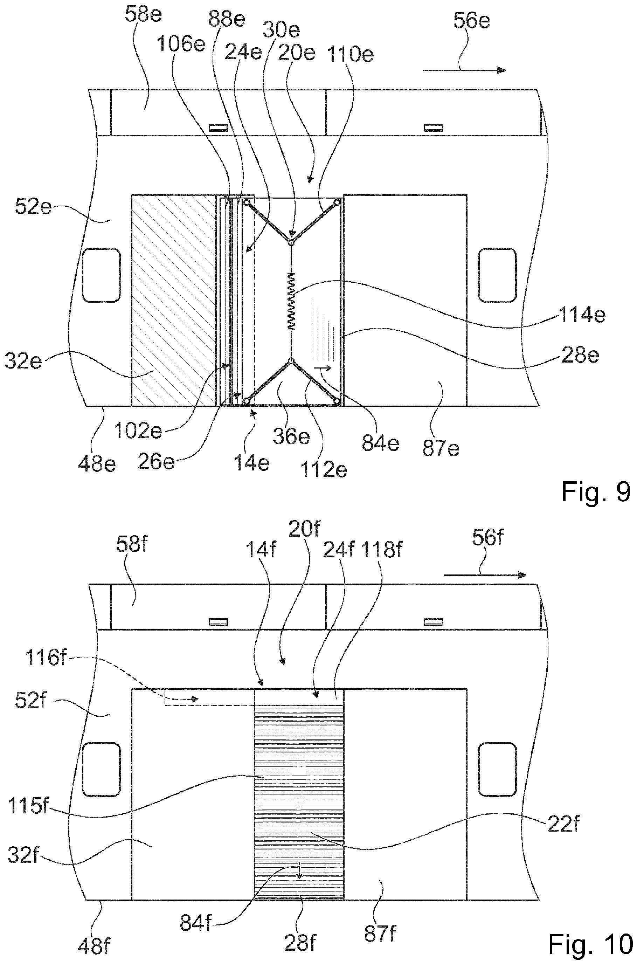

Die Figur 9 zeigt eine erfindungsgemäße Flugzeugsitzvorrichtung in einem fünften Ausführungsbeispiel. Eine Kabine 16e weist einen Kabinenboden 48e auf. Die Kabine 16e weist eine Kabinenwand 52e auf. Die Kabine 16e weist einen Gang 18e auf. Die Kabine 16e weist zumindest ein Gepäckfach 58e auf. In der Kabine 16e ist eine erfindungsgemäße Flugzeugsitzvorrichtung angeordnet. Die Flugzeugsitzvorrichtung weist einen Sitzbereich 12e auf. Der Sitzbereich 12e grenzt an den Gang 18e der Kabine 16e an. Die Flugzeugsitzvorrichtung weist einen Flugzeugsitz 66e auf. Die Flugzeugsitzvorrichtung weist eine Umhausung 32e auf. Die Flugzeugsitzvorrichtung weist einen Durchgangsbereich 20e auf. Die Flugzeugsitzvorrichtung weist eine zwischen einem geöffneten Zustand und einem geschlossenen Zustand verstellbare Trenneinheit 14e auf. Die Trenneinheit 14e weist ein ausziehbares Trennelement 22e auf. Das Trennelement 22e weist eine eingefahrene Stellung und zumindest eine ausgefahrene Stellung auf. Das Trennelement 22e ist aus einem Rollo gebildet. Das Trennelement 22e ist zumindest im Wesentlichen aus einem biegeschlaffen Material, insbesondere einem Textil, einem Leder und/oder einer Folie, gebildet. Das Trennelement 22e ist zumindest im Wesentlichen in horizontaler Richtung ausziehbar. Das Trennelement 22e weist eine Ausziehrichtung 84e auf. Die Ausziehrichtung 84e entspricht zumindest im Wesentlichen der horizontalen Richtung. Die Trenneinheit 14e weist eine Verstaueinheit 24e auf. Die Verstaueinheit 24e umfasst eine Rückholeinheit 26e. Die Rückholeinheit 26e weist zumindest ein Federelement 86e auf. Die Trenneinheit 14e weist ein Abschlusselement 28e auf. Die Trenneinheit 14e weist zumindest eine Führungseinheit 30e auf. In einer Längsrichtung 56e des Flugzeugs 46e betrachtet, ist vor der Flugzeugsitzvorrichtung eine weitere Flugzeugsitzvorrichtung mit einer Umhausung 87e angeordnet. Die Figur 9 zeigt eine schematische Seitenansicht auf einen Ausschnitt aus der Kabine 16e. Die Führungseinheit 30e weist zwei Scherenelemente 110e, 112e auf. Die Scherenelemente 110e, 112e sind jeweils an dem Abschlusselement 28e und in der Verstaueinheit 24e angeordnet. Die Führungseinheit 30e weist ein Federelement 114e auf. Das Federelement 114e ist als eine Zugfeder ausgebildet. Das Federelement 114e der Führungseinheit 30e ist in zumindest einem Betriebszustand dazu vorgesehen, eine Kraft auf das Abschlusselement 28e aufzubringen, um es von einer ausgefahrenen Stellung in die eingefahrene Stellung zu überführen. Das Federelement 114e der Führungseinheit 30e ist in zumindest einem Betriebszustand dazu vorgesehen, eine Kraft auf das Trennelement 22e und/oder das Abschlusselement 28e aufzubringen, um es in der eingefahrenen Stellung zu fixieren. Die Führungseinheit 30e ist dazu vorgesehen, das Trennelement 22e in einer Stellung zwischen der eingefahrenen Stellung und der ausgefahrenen Stellung zu fixieren. Die Führungseinheit 30e kann zusätzlich und/oder alternativ ein nicht näher dargestelltes Schienenelement und zumindest ein korrespondierendes Führungselement umfassen. Das Schienenelement ist fest auf dem Kabinenboden 48e angeordnet. Das korrespondierende Führungselement ist fest mit der Trenneinheit 14e verbunden. Das korrespondierende Führungselement ist vorzugsweise an dem Abschlusselement 28e angeordnet.

Die Figur 10 zeigt eine nicht erfindungsgemäße Flugzeugsitzvorrichtung in einem sechsten Ausführungsbeispiel. Eine Kabine 16f weist einen Kabinenboden 48f auf. Die Kabine 16f weist eine Kabinenwand 52f auf. Die Kabine 16f weist einen Gang 18f auf. Die Kabine 16f weist zumindest ein Gepäckfach 58f auf. In der Kabine 16f ist eine Flugzeugsitzvorrichtung angeordnet. Die Flugzeugsitzvorrichtung weist einen Sitzbereich 12f auf. Der Sitzbereich 12f grenzt an den Gang 18f der Kabine 16f an. Die Flugzeugsitzvorrichtung weist einen Flugzeugsitz 66f auf. Die Flugzeugsitzvorrichtung weist eine Umhausung 32f auf. Die Flugzeugsitzvorrichtung weist einen Durchgangsbereich 20f auf. Die Flugzeugsitzvorrichtung weist eine zwischen einem geöffneten Zustand und einem geschlossenen Zustand verstellbare Trenneinheit 14f auf. Die Trenneinheit 14f weist ein ausziehbares Trennelement 22f auf. Das Trennelement 22f weist eine eingefahrene Stellung und zumindest eine ausgefahrene Stellung auf. Das Trennelement 22f ist aus einer Jalousie gebildet. Das Trennelement 22f ist zumindest im Wesentlichen in vertikaler Richtung ausziehbar. Das Trennelement 22f weist eine Ausziehrichtung 84f auf. Die Ausziehrichtung 84f entspricht zumindest im Wesentlichen der vertikalen Richtung. Das Trennelement 22f ist zumindest von einem Passagier ausziehbar. Das Trennelement 22f ist von der eingefahrenen Stellung in eine ausgefahrene Stellung überführbar. Das Trennelement 22f ist von einer ausgefahrenen Stellung in die eingefahrene Stellung überführbar. Die Trenneinheit 14f weist eine Verstaueinheit 24f auf. Die Trenneinheit 14f weist ein Abschlusselement 28f auf. In einer Längsrichtung 56f eines Flugzeugs 46f betrachtet, ist vor der Flugzeugsitzvorrichtung eine weitere Flugzeugsitzvorrichtung mit einer Umhausung 87f angeordnet.

Die Figur 10 zeigt eine schematische Seitenansicht auf einen Ausschnitt aus der Kabine 16f. Das Trennelement 22f ist zumindest im Wesentlichen aus mehreren Lamellenelementen gebildet. Aus Gründen der Übersichtlichkeit ist lediglich ein Lamellenelement 115f exemplarisch mit einem Bezugszeichen versehen. Mehrere Lamellenelemente 115f sind miteinander gekoppelt. Mehrere miteinander gekoppelte Lamellenelemente 115f sind in dem geschlossenen Zustand parallel zueinander und zumindest teilweise überlappend angeordnet, um einen möglichst großen Bereich des Durchgangsbereichs 20f zu überspannen. Mehrere miteinander gekoppelte Lamellenelemente 115f sind in dem geöffneten Zustand parallel zueinander und übereinander gestapelt angeordnet, um möglichst platzsparend untergebracht zu werden. Das Lamellenelement 115f ist als eine ebene rechteckförmige Platte ausgebildet. Das Lamellenelement 115f ist brandhemmend ausgebildet. Die Verstaueinheit 24f ist beweglich gelagert. Die Verstaueinheit 24f ist zumindest im Wesentlichen in horizontaler Richtung beweglich gelagert. Die Verstaueinheit 24f weist eine Gebrauchsstellung und eine Nichtgebrauchsstellung auf. Die Figur 10 zeigt die Verstaueinheit 24f in der Gebrauchsstellung. Die Verstaueinheit 24f ist in der Nichtgebrauchsstellung vollständig in der Umhausung 32f angeordnet. Die Umhausung 32f weist einen Hohlraum 116f auf. Die Verstaueinheit 24f ist als in der Umhausung 32f versenkbar ausgebildet. Die Verstaueinheit 24f ist in der Nichtgebrauchsstellung vollständig in der Umhausung 32f angeordnet. Die Verstaueinheit 24f ist in der Nichtgebrauchsstellung vollständig in dem Hohlraum 116f angeordnet. Die Verstaueinheit 24f kann zumindest im Wesentlichen in der horizontalen Richtung translatorisch von der Nichtgebrauchsstellung der Verstaueinheit 24f in die Gebrauchsstellung der Verstaueinheit 24f in den Durchgangsbereich 20f bewegt werden. Die Verstaueinheit 24f ist manuell, mittels eines nicht näher dargestellten Aktuators oder eines nicht näher dargestellten Elektromotors bewegbar ausgebildet. Eine Bewegung der Verstaueinheit 24f ist durch zumindest einen nicht näher dargestellten Anschlag begrenzt. Die Verstaueinheit 24f verrastet in der Gebrauchsstellung und/oder der Nichtgebrauchsstellung der Verstaueinheit 24f. Die Verstaueinheit 24f weist ein Gehäuse 118f auf. In der Gebrauchsstellung der Verstaueinheit 24f kann das Trennelement 22f in der vertikalen Richtung von der eingefahrenen Stellung in eine ausgefahrene Stellung oder von der ausgefahrenen Stellung in eine eingefahrene Stellung bewegt werden. Das Abschlusselement 28f ist parallel zu dem Kabinenboden 48f ausgerichtet. Das Abschlusselement 28f liegt in der vollständig ausgefahrenen Stellung des Trennelements 22f auf dem Kabinenboden 48f auf. Die Trenneinheit 14f weist zumindest eine Führungseinheit 30f auf. Die Führungseinheit 30f umfasst zwei nicht näher dargestellte Schienenelemente, die jeweils fest mit einem Kabinenelement, insbesondere der Umhausung 32f und der Umhausung 87f verbunden sind, und zwei nicht näher dargestellte korrespondierende Führungselemente, die mit der Trenneinheit 14f fest verbunden sind. Die korrespondierenden Führungselemente sind an dem Abschlusselement 28f angeordnet. Die korrespondierenden Führungselemente sind vorzugsweise jeweils an einem vorderen Ende und einem hinteren Ende des Abschlusselements 28f, in der Längsrichtung 56f des Flugzeugs 46f betrachtet, angeordnet.

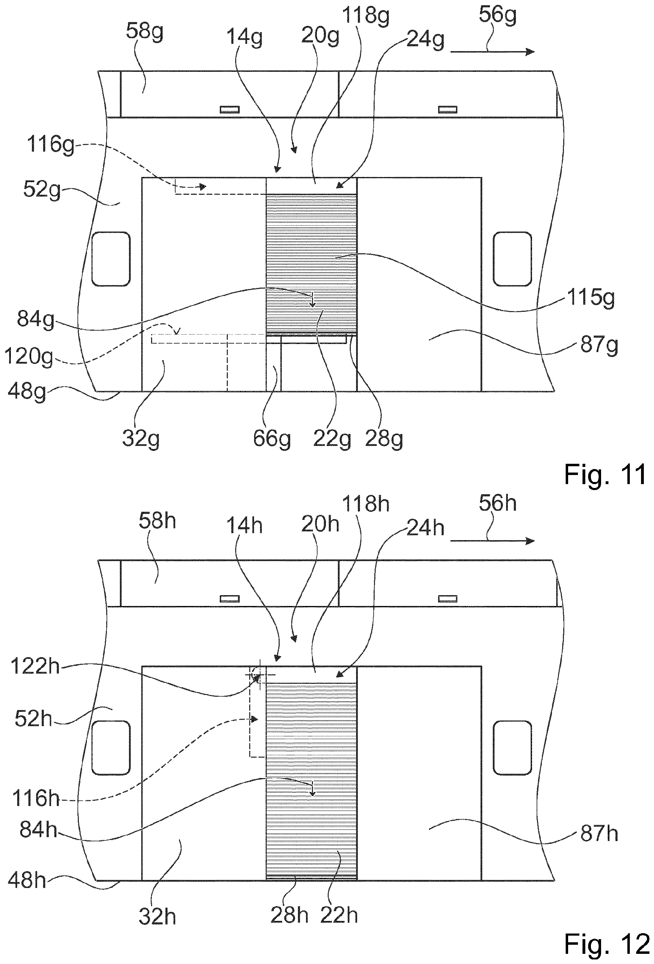

Die Figur 11 zeigt eine nicht erfindungsgemäße Flugzeugsitzvorrichtung in einem siebten Ausführungsbeispiel. Eine Kabine 16g weist einen Kabinenboden 48g auf. Die Kabine 16g weist eine Kabinenwand 52g auf. Die Kabine 16g weist einen Gang 18g auf. Die Kabine 16g weist zumindest ein Gepäckfach 58g auf. In der Kabine 16g ist eine Flugzeugsitzvorrichtung angeordnet. Die Flugzeugsitzvorrichtung weist einen Sitzbereich 12g auf. Der Sitzbereich 12g grenzt an den Gang 18g der Kabine 16g an. Die Flugzeugsitzvorrichtung weist einen Flugzeugsitz 66g auf. Die Flugzeugsitzvorrichtung weist eine Umhausung 32g auf. Die Umhausung 32g weist einen Hohlraum 116g auf. Die Flugzeugsitzvorrichtung weist einen Durchgangsbereich 20g auf. Die Flugzeugsitzvorrichtung weist eine zwischen einem geöffneten Zustand und einem geschlossenen Zustand verstellbare Trenneinheit 14g auf. Die Trenneinheit 14g weist ein ausziehbares Trennelement 22g auf. Das Trennelement 22g weist eine eingefahrene Stellung und zumindest eine ausgefahrene Stellung auf. Das Trennelement 22g ist aus einem Plissee gebildet. Das Trennelement 22g ist zumindest im Wesentlichen aus einem biegeschlaffen Material, insbesondere einem Textil, einem Leder und/oder einer Folie, gebildet. Das Trennelement 22g ist zumindest im Wesentlichen in vertikaler Richtung ausziehbar. Das Trennelement 22g weist eine Ausziehrichtung 84g auf. Die Ausziehrichtung 84g entspricht zumindest im Wesentlichen der vertikalen Richtung. Das Trennelement 22g ist zumindest von einem Passagier ausziehbar. Das Trennelement 22g ist von der eingefahrenen Stellung in eine ausgefahrene Stellung überführbar. Das Trennelement 22g ist von einer ausgefahrenen Stellung in die eingefahrene Stellung überführbar. Die Trenneinheit 14g weist eine Verstaueinheit 24g auf. Die Verstaueinheit 24g ist beweglich gelagert. Die Verstaueinheit 24g ist zumindest im Wesentlichen in horizontaler Richtung beweglich gelagert. Die Verstaueinheit 24g weist eine Gebrauchsstellung und eine Nichtgebrauchsstellung auf. Die Figur 11 zeigt die Verstaueinheit 24g in der Gebrauchsstellung. Die Verstaueinheit 24g weist ein Gehäuse 118g auf. Die Trenneinheit 14g weist ein Abschlusselement 28g auf. In einer Längsrichtung 56g eines Flugzeugs 46g betrachtet, ist vor der Flugzeugsitzvorrichtung eine weitere Flugzeugsitzvorrichtung mit einer Umhausung 87g angeordnet.

Die Figur 11 zeigt eine schematische Seitenansicht auf einen Ausschnitt aus der Kabine 16g. Das Trennelement 22g ist ziehharmonikaartiges oder leporelloartig ausgebildet. Das biegeschlaffe Material des Trennelements 22g weist mehrere parallel angeordnete Falze auf. Das biegeschlaffe Material des Trennelements 22g ist in dem geöffneten Zustand der Trenneinheit 14g zusammengefaltet. Das biegeschlaffe Material ist in dem geschlossenen Zustand der Trenneinheit 14g auseinandergefaltet. Der Flugzeugsitz 66g ist in der Liegeposition dargestellt. Der Flugzeugsitz 66g bildet in der Liegeposition eine Liegefläche 120g aus. Die Trenneinheit 14g ist in dem geschlossenen Zustand teilweise verschlossen. In einem Bereich zwischen dem Kabinenboden 48g und dem Abschlusselement 28g ist der Durchgangsbereich 20g geöffnet. Die Trenneinheit 14g erstreckt sich in dem geschlossenen Zustand von oberhalb einer Liegefläche 120g des Flugzeugsitzes 66g bis zu einem obersten Ende der Umhausung 32g in den Durchgangsbereich 20g. Vorzugsweise kann die Trenneinheit 14g zusätzlich in zumindest einer Zwischenstellung zwischen dem geöffneten Zustand und dem geschlossenen Zustand gehalten werden.

Die Figur 12 zeigt eine nicht erfindungsgemäße Flugzeugsitzvorrichtung in einem achten Ausführungsbeispiel. Eine Kabine 16h weist einen Kabinenboden 48h auf. Die Kabine 16h weist eine Kabinenwand 52h auf. Die Kabine 16h weist einen Gang 18h auf. Die Kabine 16h weist zumindest ein Gepäckfach 58h auf. In der Kabine 16h ist eine Flugzeugsitzvorrichtung angeordnet. Die Flugzeugsitzvorrichtung weist einen Sitzbereich 12h auf. Der Sitzbereich 12h grenzt an den Gang 18h der Kabine 16h an. Die Flugzeugsitzvorrichtung weist einen Flugzeugsitz 66h auf. Die Flugzeugsitzvorrichtung weist eine Umhausung 32h auf. Die Flugzeugsitzvorrichtung weist einen Durchgangsbereich 20h auf. Die Flugzeugsitzvorrichtung weist eine zwischen einem geöffneten Zustand und einem geschlossenen Zustand verstellbare Trenneinheit 14h auf. Die Trenneinheit 14h weist ein ausziehbares Trennelement 22h auf. Das Trennelement 22h weist eine eingefahrene Stellung und zumindest eine ausgefahrene Stellung auf. Das Trennelement 22h ist aus einem Rollladen gebildet. Das Trennelement 22h ist zumindest im Wesentlichen in vertikaler Richtung ausziehbar. Das Trennelement 22h weist eine Ausziehrichtung 84h auf. Die Ausziehrichtung 84h entspricht zumindest im Wesentlichen der vertikalen Richtung. Das Trennelement 22h ist zumindest von einem Passagier ausziehbar. Das Trennelement 22h ist von der eingefahrenen Stellung in eine ausgefahrene Stellung überführbar. Das Trennelement 22h ist von einer ausgefahrenen Stellung in die eingefahrene Stellung überführbar. Die Trenneinheit 14h weist eine Verstaueinheit 24h auf. Die Verstaueinheit 24h ist beweglich gelagert. Die Verstaueinheit 24h ist zumindest im Wesentlichen in rotatorischer Richtung beweglich gelagert. Die Verstaueinheit 24h weist eine Gebrauchsstellung und eine Nichtgebrauchsstellung auf. Die Figur 12 zeigt die Verstaueinheit 24h in der Gebrauchsstellung. Die Verstaueinheit 24h ist in der Nichtgebrauchsstellung vollständig in der Umhausung 32h angeordnet. Die Umhausung 32h weist einen Hohlraum 116h auf. Die Verstaueinheit 24h ist als in der Umhausung 32h versenkbar ausgebildet. Die Verstaueinheit 24h ist in der Nichtgebrauchsstellung vollständig in der Umhausung 32h angeordnet. Die Verstaueinheit 24h ist in der Nichtgebrauchsstellung vollständig in dem Hohlraum 116h angeordnet. Die Verstaueinheit 24h kann zumindest im Wesentlichen in der rotatorischen Richtung rotatorisch von der Nichtgebrauchsstellung der Verstaueinheit 24h in die Gebrauchsstellung der Verstaueinheit 24h in den Durchgangsbereich 20h bewegt werden. Die Verstaueinheit 24h ist manuell, mittels eines nicht näher dargestellten Aktuators oder eines nicht näher dargestellten Elektromotors bewegbar ausgebildet. Eine Bewegung der Verstaueinheit 24h ist durch zumindest einen nicht näher dargestellten Anschlag begrenzt. Die Verstaueinheit 24h verrastet in der Gebrauchsstellung und/oder der Nichtgebrauchsstellung der Verstaueinheit 24h. Die Verstaueinheit 24h weist ein Gehäuse 118h auf. In der Gebrauchsstellung der Verstaueinheit 24h kann das Trennelement 22h in der rotatorischen Richtung von der eingefahrenen Stellung in eine ausgefahrene Stellung oder von der ausgefahrenen Stellung in eine eingefahrene Stellung bewegt werden. Die Trenneinheit 14h weist ein Abschlusselement 28h auf. In einer Längsrichtung 56h eines Flugzeugs 46h betrachtet, ist vor der Flugzeugsitzvorrichtung eine weitere Flugzeugsitzvorrichtung mit einer Umhausung 87h angeordnet.

Die Figur 12 zeigt eine schematische Seitenansicht auf einen Ausschnitt aus der Kabine 16h Das Trennelement 22h ist zumindest im Wesentlichen aus mehreren Lamellenelementen gebildet. Aus Gründen der Übersichtlichkeit ist lediglich ein Lamellenelement 115h exemplarisch mit einem Bezugszeichen versehen. Mehrere Lamellenelemente 115h sind miteinander gekoppelt. Mehrere miteinander gekoppelte Lamellenelemente 115h sind in dem geschlossenen Zustand parallel zueinander und überlappungsfrei angeordnet, um einen möglichst großen Bereich des Durchgangsbereichs 20h zu überspannen. Mehrere miteinander gekoppelte Lamellenelemente 115h sind in dem geöffneten Zustand jeweils zueinander verschwenkt und aneinander aufgerollt angeordnet, um möglichst platzsparend untergebracht zu werden. Das Lamellenelement 115h ist als eine ebene rechteckförmige Platte ausgebildet. Das Lamellenelement 115h ist brandhemmend ausgebildet. Die Verstaueinheit 24h ist zumindest im Wesentlichen schwenkbar gelagert. Die Figur 12 zeigt die Verstaueinheit 24h in der Gebrauchsstellung. Die Verstaueinheit 24h ist in der Nichtgebrauchsstellung vollständig in der Umhausung 32h angeordnet. Die Umhausung 32h weist einen Hohlraum 116h auf. Die Verstaueinheit 24h ist als in der Umhausung 32h versenkbar ausgebildet. Die Verstaueinheit 24h ist in der Nichtgebrauchsstellung vollständig in der Umhausung 32h angeordnet. Die Verstaueinheit 24h ist in der Nichtgebrauchsstellung vollständig in dem Hohlraum 116h angeordnet. Die Verstaueinheit 24h kann zumindest im Wesentlichen rotatorisch von der Nichtgebrauchsstellung der Verstaueinheit 24h in die Gebrauchsstellung der Verstaueinheit 24h in den Durchgangsbereich 20h bewegt werden. Die Trenneinheit 14h weist eine Drehachse 122h auf. Die Drehachse 122h ist parallel zu dem Kabinenboden 48h und orthogonal zu der Längsrichtung 56h des Flugzeugs 46h ausgerichtet. Die Verstaueinheit 24h kann um einen Winkel von 90 Grad um die Drehachse 122h verschwenkt werden. Die Verstaueinheit 24h ist manuell, mittels eines nicht näher dargestellten Aktuators und/oder eines nicht näher dargestellten Elektromotors bewegbar ausgebildet. Eine Bewegung der Verstaueinheit 24h ist durch zumindest einen nicht näher dargestellten Anschlag begrenzt. Die Verstaueinheit 24h verrastet in der Nichtgebrauchsstellung und/oder der Gebrauchsstellung der Verstaueinheit 24h. In der Gebrauchsstellung der Verstaueinheit 24h kann das Trennelement 22h in der vertikalen Richtung von der eingefahrenen Stellung in eine ausgefahrene Stellung oder von einer ausgefahrenen Stellung in die eingefahrene Stellung bewegt werden.

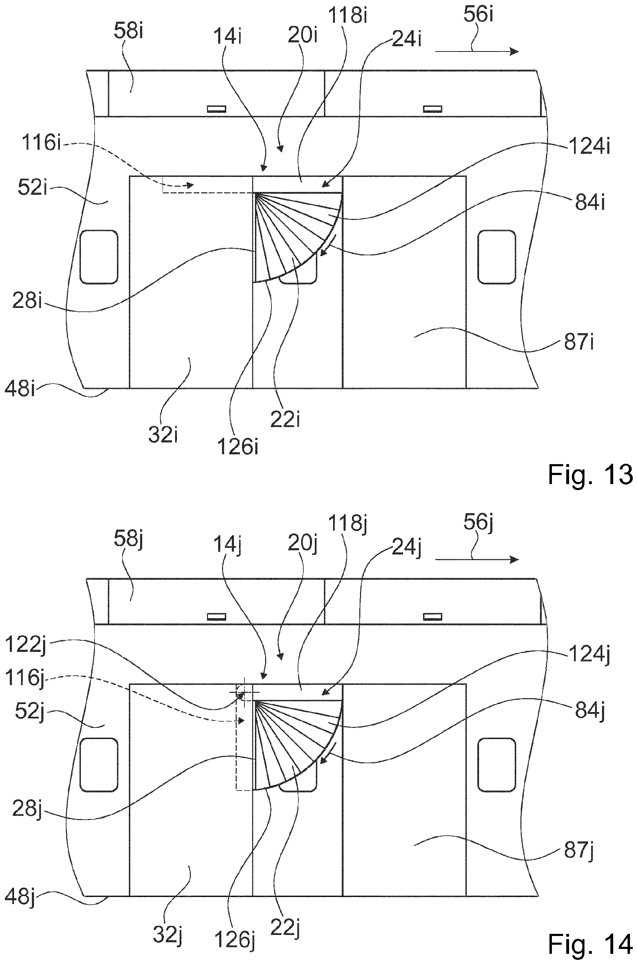

Die Figur 13 zeigt eine nicht erfindungsgemäße Flugzeugsitzvorrichtung in einem neunten Ausführungsbeispiel. Eine Kabine 16i weist einen Kabinenboden 48i auf. Die Kabine 16i weist eine Kabinenwand 52i auf. Die Kabine 16i weist einen Gang 18i auf. Die Kabine 16i weist zumindest ein Gepäckfach 58i auf. In der Kabine 16i ist eine Flugzeugsitzvorrichtung angeordnet. Die Flugzeugsitzvorrichtung weist einen Sitzbereich 12i auf. Der Sitzbereich 12i grenzt an den Gang 18i der Kabine 16i an. Die Flugzeugsitzvorrichtung weist einen Flugzeugsitz 66i auf. Die Flugzeugsitzvorrichtung weist eine Umhausung 32i auf. Die Umhausung 32i weist einen Hohlraum 116i auf. Die Flugzeugsitzvorrichtung weist einen Durchgangsbereich 20i auf. Die Flugzeugsitzvorrichtung weist eine zwischen einem geöffneten Zustand und einem geschlossenen Zustand verstellbare Trenneinheit 14i auf. Die Trenneinheit 14i weist ein ausziehbares Trennelement 22i auf. Das Trennelement 22i weist eine eingefahrene Stellung und zumindest eine ausgefahrene Stellung auf. Das Trennelement 22i ist aus einer Jalousie gebildet. Das Trennelement 22i ist zumindest im Wesentlichen in rotatorischer Richtung ausziehbar. Das Trennelement 22i weist eine Ausziehrichtung 84i auf. Die Ausziehrichtung 84i entspricht zumindest im Wesentlichen der rotatorischen Richtung. Das Trennelement 22i ist zumindest von einem Passagier ausziehbar. Das Trennelement 22i ist von der eingefahrenen Stellung in eine ausgefahrene Stellung überführbar. Das Trennelement 22i ist von einer ausgefahrenen Stellung in die eingefahrene Stellung überführbar. Die Trenneinheit 14i weist eine Verstaueinheit 24i auf. Die Verstaueinheit 24i ist beweglich gelagert. Die Verstaueinheit 24i ist zumindest im Wesentlichen in horizontaler Richtung beweglich gelagert. Die Verstaueinheit 24i weist eine Gebrauchsstellung und eine Nichtgebrauchsstellung auf. Die Figur 13 zeigt die Verstaueinheit 24i in der Gebrauchsstellung. Die Verstaueinheit 24i weist ein Gehäuse 118i auf. Die Trenneinheit 14i weist ein Abschlusselement 28i auf. In einer Längsrichtung 56i eines Flugzeugs 46i betrachtet, ist vor der Flugzeugsitzvorrichtung eine weitere Flugzeugsitzvorrichtung mit einer Umhausung 87i angeordnet.

Die Figur 13 zeigt eine schematische Seitenansicht auf einen Ausschnitt aus der Kabine 16i. Die Trenneinheit 14i ist dazu vorgesehen, den Durchgangsbereich 20i in ihrem geschlossenen Zustand zumindest teilweise zu verschließen. Die Trenneinheit 14i versperrt in dem geschlossenen Zustand einen Durchgang zwischen dem Sitzbereich 12i und dem Gang 18i. Zumindest ein Teil der Trenneinheit 14i erstreckt sich in dem geschlossenen Zustand in einer Richtung parallel zu dem Kabinenboden 48i in den Durchgangsbereich 20i und verschließt den Durchgangsbereich 20i an einer Stelle vollständig. Zumindest ein Teil der Trenneinheit 14i erstreckt sich in dem geschlossenen Zustand in einer Richtung orthogonal zu dem Kabinenboden 48i in den Durchgangsbereich 20i. Die Trenneinheit 14i trennt den Sitzbereich 12i in dem geschlossenen Zustand von einem obersten Ende der Umhausung 32i in Richtung des Kabinenbodens 48i teilweise blickdicht von dem Gang 18i der Kabine 16i ab. Der Durchgangsbereich 20i ist in einem Bereich zwischen der Umhausung 32i und der Kabinendecke 50i in dem geschlossenen Zustand nicht durch die Trenneinheit 14i verschlossen. Das Trennelement 22i ist viertelkreisförmig ausgebildet. Das Trennelement 22i ist zumindest im Wesentlichen aus mehreren Lamellenelementen gebildet. Aus Gründen der Übersichtlichkeit ist lediglich ein Lamellenelement 124i exemplarisch mit einem Bezugszeichen versehen. Mehrere Lamellenelemente 124i sind miteinander gekoppelt. Mehrere miteinander gekoppelte Lamellenelemente 124i sind in dem geschlossenen Zustand parallel zueinander und zumindest teilweise überlappend angeordnet, um einen möglichst großen Bereich des Durchgangsbereichs 20i zu überspannen. Mehrere miteinander gekoppelte Lamellenelemente 124i sind in dem geöffneten Zustand parallel zueinander und übereinander gestapelt angeordnet, um möglichst platzsparend untergebracht zu werden. Das Lamellenelement 124i ist dreieckförmig ausgebildet, wobei eine Seite an einer Außenkontur 126i des Trennelements 22i eine Abrundung aufweist. Die Abrundung ermöglicht eine vorteilhafte Viertelkreisform des Trennelements 22i. Das Abschlusselement 28i ist schwenkbar gelagert. Das Abschlusselement 28i ist mit der Verstaueinheit 24i gekoppelt. Das Abschlusselement 28i ist in der eingefahrenen Stellung des Trennelements 22i in einer Haupterstreckungsrichtung des Abschlusselements 28i parallel zu dem Kabinenboden 48i ausgerichtet. Das Abschlusselement 28i ist in der vollständig ausgefahrenen Stellung des Trennelements 22i in einer Haupterstreckungsrichtung des Abschlusselements 28i orthogonal zu dem Kabinenboden 48i ausgerichtet. Das Abschlusselement 28i liegt in der vollständig ausgefahrenen Stellung des Trennelements 22i an der Umhausung 32i an.

Die Figur 14 zeigt eine nicht erfindungsgemäße Flugzeugsitzvorrichtung in einem zehnten Ausführungsbeispiel. Eine Kabine 16j weist einen Kabinenboden 48j auf. Die Kabine 16j weist eine Kabinenwand 52j auf. Die Kabine 16j weist einen Gang 18j auf. Die Kabine 16j weist zumindest ein Gepäckfach 58j auf. In der Kabine 16j ist eine Flugzeugsitzvorrichtung angeordnet. Die Flugzeugsitzvorrichtung weist einen Sitzbereich 12j auf. Der Sitzbereich 12j grenzt an den Gang 18j der Kabine 16j an. Die Flugzeugsitzvorrichtung weist einen Flugzeugsitz 66j auf. Die Flugzeugsitzvorrichtung weist eine Umhausung 32j auf. Die Umhausung 32j weist einen Hohlraum 116j auf. Die Flugzeugsitzvorrichtung weist einen Durchgangsbereich 20j auf. Die Flugzeugsitzvorrichtung weist eine zwischen einem geöffneten Zustand und einem geschlossenen Zustand verstellbare Trenneinheit 14j auf. Die Trenneinheit 14j weist ein ausziehbares Trennelement 22j auf. Das Trennelement 22j weist eine eingefahrene Stellung und zumindest eine ausgefahrene Stellung auf. Das Trennelement 22j ist aus einer Jalousie gebildet. Das Trennelement 22j ist zumindest im Wesentlichen in rotatorischer Richtung ausziehbar. Das Trennelement 22j weist eine Ausziehrichtung 84j auf. Die Ausziehrichtung 84j entspricht zumindest im Wesentlichen der rotatorischen Richtung. Das Trennelement 22j ist zumindest von einem Passagier ausziehbar. Das Trennelement 22j ist von der eingefahrenen Stellung in eine ausgefahrene Stellung überführbar. Das Trennelement 22j ist von einer ausgefahrenen Stellung in die eingefahrene Stellung überführbar. Die Trenneinheit 14j weist eine Verstaueinheit 24j auf. Die Verstaueinheit 24j ist beweglich gelagert. Die Verstaueinheit 24j ist zumindest im Wesentlichen schwenkbar gelagert. Die Trenneinheit 14j weist eine Drehachse 122j auf. Die Drehachse 122j ist parallel zu dem Kabinenboden 48j und orthogonal zu der Längsrichtung 56j des Flugzeugs 46j ausgerichtet. Die Verstaueinheit 24j kann um einen Winkel von 90 Grad um die Drehachse 122j verschwenkt werden. Die Verstaueinheit 24j weist eine Gebrauchsstellung und eine Nichtgebrauchsstellung auf. Die Figur 14 zeigt die Verstaueinheit 24j in der Gebrauchsstellung. Die Trenneinheit 14j weist ein Abschlusselement 28j auf. In einer Längsrichtung 56j eines Flugzeugs 46j betrachtet, ist vor der Flugzeugsitzvorrichtung eine weitere Flugzeugsitzvorrichtung mit einer Umhausung 87j angeordnet.

Die Figur 14 zeigt eine schematische Seitenansicht auf einen Ausschnitt aus der Kabine 16j. Die Trenneinheit 14j ist dazu vorgesehen, den Durchgangsbereich 20j in ihrem geschlossenen Zustand zumindest teilweise zu verschließen. Die Trenneinheit 14j versperrt in dem geschlossenen Zustand einen Durchgang zwischen dem Sitzbereich 12j und dem Gang 18j. Zumindest ein Teil der Trenneinheit 14j erstreckt sich in dem geschlossenen Zustand in einer Richtung parallel zu dem Kabinenboden 48j in den Durchgangsbereich 20j und verschließt den Durchgangsbereich 20j an einer Stelle vollständig. Zumindest ein Teil der Trenneinheit 14j erstreckt sich in dem geschlossenen Zustand in einer Richtung orthogonal zu dem Kabinenboden 48j in den Durchgangsbereich 20j. Die Trenneinheit 14j trennt den Sitzbereich 12j in dem geschlossenen Zustand von einem obersten Ende der Umhausung 32j in Richtung des Kabinenbodens 48j teilweise blickdicht von dem Gang 18j der Kabine 16j ab. Der Durchgangsbereich 20j ist in einem Bereich zwischen der Umhausung 32j und der Kabinendecke 50j in dem geschlossenen Zustand nicht durch die Trenneinheit 14j verschlossen. Das Trennelement 22j ist viertelkreisförmig ausgebildet. In der Gebrauchsstellung der Verstaueinheit 24j kann das Trennelement 22j in der rotatorischen Richtung von der eingefahrenen Stellung in eine ausgefahrene Stellung oder von einer ausgefahrenen Stellung in die eingefahrene Stellung bewegt werden. Das Trennelement 22j ist zumindest im Wesentlichen aus mehreren Lamellenelementen gebildet. Aus Gründen der Übersichtlichkeit ist lediglich ein Lamellenelement 124j exemplarisch mit einem Bezugszeichen versehen. Mehrere Lamellenelemente 124j sind miteinander gekoppelt. Mehrere miteinander gekoppelte Lamellenelemente 124j sind in dem geschlossenen Zustand parallel zueinander und zumindest teilweise überlappend angeordnet, um einen möglichst großen Bereich des Durchgangsbereichs 20j zu überspannen. Mehrere miteinander gekoppelte Lamellenelemente 124j sind in dem geöffneten Zustand parallel zueinander und übereinander gestapelt angeordnet, um möglichst platzsparend untergebracht zu werden. Das Lamellenelement 124j ist im vorliegenden Fall dreieckförmig ausgebildet, wobei eine Seite an der Außenkontur 126j des Trennelements 22j eine Abrundung aufweist. Die Abrundung ermöglicht eine vorteilhafte Viertelkreisform des Trennelements 22j. Das Abschlusselement 28j ist schwenkbar gelagert. Das Abschlusselement 28j ist mit der Verstaueinheit 24j gekoppelt. Das Abschlusselement 28j ist in der eingefahrenen Stellung des Trennelements 22j in einer Haupterstreckungsrichtung des Abschlusselements 28j parallel zu dem Kabinenboden 48j ausgerichtet. Das Abschlusselement 28j ist in der vollständig ausgefahrenen Stellung des Trennelements 22j in einer Haupterstreckungsrichtung des Abschlusselements 28j orthogonal zu dem Kabinenboden 48j ausgerichtet. Das Abschlusselement 28j liegt in der vollständig ausgefahrenen Stellung des Trennelements 22j an der Umhausung 32j an.

Grundsätzlich wäre jedoch auch denkbar, dass das Trennelement 22j an einem Ende fest mit der Umhausung 32j verbunden ist und durch eine rotatorische Bewegung der Verstaueinheit 24j in eine ausgefahrene Stellung versetzt wird, wobei die Trenneinheit 14j in diesem Fall kein Abschlusselement aufweist. Alternativ wäre grundsätzlich auch denkbar, dass die Verstaueinheit 24j und das Abschlusselement 28j vertauscht angeordnet sind, wobei die Verstaueinheit 24j fest mit der Umhausung 32j verbunden ist und das Trennelement 22j in der rotatorischen Richtung von der eingefahrenen Stellung in eine ausgefahrene Stellung oder von einer ausgefahrenen Stellung in die eingefahrene Stellung bewegt werden kann.

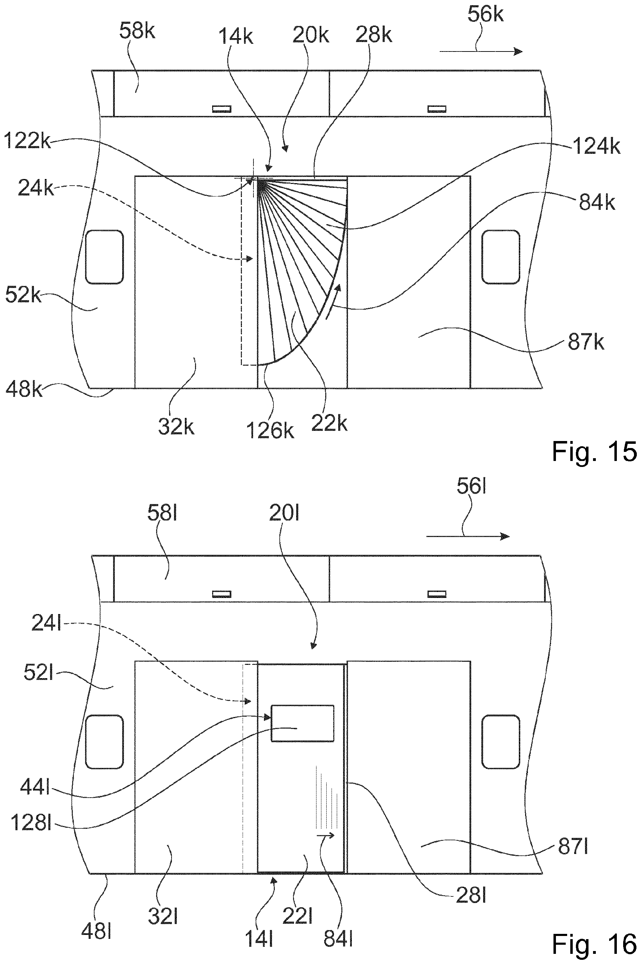

Die Figur 15 zeigt eine nicht erfindungsgemäße Flugzeugsitzvorrichtung in einem elften Ausführungsbeispiel. Eine Kabine 16k weist einen Kabinenboden 48k auf. Die Kabine 16k weist eine Kabinenwand 52k auf. Die Kabine 16k weist einen Gang 18k auf. Die Kabine 16k weist zumindest ein Gepäckfach 58k auf. In der Kabine 16k ist eine Flugzeugsitzvorrichtung angeordnet. Die Flugzeugsitzvorrichtung weist einen Sitzbereich 12k auf. Der Sitzbereich 12k grenzt an den Gang 18k der Kabine 16k an. Die Flugzeugsitzvorrichtung weist einen Flugzeugsitz 66k auf. Die Flugzeugsitzvorrichtung weist eine Umhausung 32k auf. Die Flugzeugsitzvorrichtung weist einen Durchgangsbereich 20k auf. Die Flugzeugsitzvorrichtung weist eine zwischen einem geöffneten Zustand und einem geschlossenen Zustand verstellbare Trenneinheit 14k auf. Die Trenneinheit 14k weist ein ausziehbares Trennelement 22k auf. Das Trennelement 22k weist eine eingefahrene Stellung und zumindest eine ausgefahrene Stellung auf. Das Trennelement 22k ist aus einer Jalousie gebildet. Das Trennelement 22k ist zumindest im Wesentlichen in rotatorischer Richtung ausziehbar. Das Trennelement 22k weist eine Ausziehrichtung 84k auf. Die Ausziehrichtung 84k entspricht zumindest im Wesentlichen der rotatorischen Richtung. Das Trennelement 22k ist zumindest von einem Passagier ausziehbar. Das Trennelement 22k ist von der eingefahrenen Stellung in eine ausgefahrene Stellung überführbar. Das Trennelement 22k ist von einer ausgefahrenen Stellung in die eingefahrene Stellung überführbar. Die Trenneinheit 14k weist eine Verstaueinheit 24k auf. Die Trenneinheit 14k weist ein Abschlusselement 28k auf. In einer Längsrichtung 56k eines Flugzeugs 46k betrachtet, ist vor der Flugzeugsitzvorrichtung eine weitere Flugzeugsitzvorrichtung mit einer Umhausung 87k angeordnet.

Die Figur 15 zeigt eine schematische Seitenansicht auf einen Ausschnitt aus der Kabine 16k. Die Trenneinheit 14k ist dazu vorgesehen, den Durchgangsbereich 20k in ihrem geschlossenen Zustand zumindest teilweise zu verschließen. Die Trenneinheit 14k versperrt in dem geschlossenen Zustand einen Durchgang zwischen dem Sitzbereich 12k und dem Gang 18k. Zumindest ein Teil der Trenneinheit 14k erstreckt sich in dem geschlossenen Zustand in einer Richtung parallel zu dem Kabinenboden 48k in den Durchgangsbereich 20k und verschließt den Durchgangsbereich 20k an einer Stelle vollständig. Zumindest ein Teil der Trenneinheit 14k erstreckt sich in dem geschlossenen Zustand in einer Richtung orthogonal zu dem Kabinenboden 48k in den Durchgangsbereich 20k. Die Trenneinheit 14k trennt den Sitzbereich 12k in dem geschlossenen Zustand von einem obersten Ende der Umhausung 32k in Richtung des Kabinenbodens 48k teilweise blickdicht von dem Gang 18k der Kabine 16k ab. Der Durchgangsbereich 20k ist in einem Bereich zwischen der Umhausung 32k und der Kabinendecke 50k in dem geschlossenen Zustand nicht durch die Trenneinheit 14k verschlossen. Das Trennelement 22k ist viertelellipsenförmig ausgebildet. Grundsätzlich ist auch denkbar, dass das Trennelement 22k zumindest annähernd viertelellipsenförmig ausgebildet ist. Die Verstaueinheit 24k ist unbeweglich ausgebildet. Das Trennelement 22k kann in der rotatorischen Richtung von der eingefahrenen Stellung in eine ausgefahrene Stellung oder von einer ausgefahrenen Stellung in die eingefahrene Stellung bewegt werden. Das Trennelement ist an einem Ende fest mit der Verstaueinheit 24k verbunden. Das Trennelement 22k ist zumindest im Wesentlichen aus mehreren Lamellenelementen gebildet. Aus Gründen der Übersichtlichkeit ist lediglich ein Lamellenelement 124k exemplarisch mit einem Bezugszeichen versehen. Mehrere Lamellenelemente 124k sind miteinander gekoppelt. Mehrere miteinander gekoppelte Lamellenelemente 124k sind in dem geschlossenen Zustand parallel zueinander und zumindest teilweise überlappend angeordnet, um einen möglichst großen Bereich des Durchgangsbereichs 20k zu überspannen. Mehrere miteinander gekoppelte Lamellenelemente 124k sind in dem geöffneten Zustand parallel zueinander und übereinander gestapelt angeordnet, um möglichst platzsparend untergebracht zu werden. Das Lamellenelement 124k ist im vorliegenden Fall dreieckförmig ausgebildet, wobei eine Seite an der Außenkontur 126k des Trennelements 22k eine Abrundung aufweist. Die Abrundung ermöglicht eine vorteilhafte Viertelellipsenform des Trennelements 22k. Die Abrundung kann eine von einem Kreisbogen abweichenden Kontur aufweisen. Das Abschlusselement 28k ist schwenkbar gelagert. Die Trenneinheit 14k weist eine Drehachse 122k auf. Die Drehachse 122k ist parallel zu dem Kabinenboden 48k und orthogonal zu der Längsrichtung 56k des Flugzeugs 46k ausgerichtet. Das Abschlusselement 28k kann um einen Winkel von 90 Grad um die Drehachse 122k verschwenkt werden. Das Abschlusselement 28k ist mit der Verstaueinheit 24k gekoppelt. Das Abschlusselement 28k ist in der eingefahrenen Stellung des Trennelements 22k in einer Haupterstreckungsrichtung des Abschlusselements 28k orthogonal zu dem Kabinenboden 48k ausgerichtet. Das Abschlusselement 28k ist in der vollständig ausgefahrenen Stellung des Trennelements 22k in einer Haupterstreckungsrichtung des Abschlusselements 28k parallel zu dem Kabinenboden 48k ausgerichtet. Das Abschlusselement 28k ist in der eingefahrenen Stellung des Trennelements 22k in der Verstaueinheit 24k angeordnet.

Die Figur 16 zeigt eine nicht erfindungsgemäße Flugzeugsitzvorrichtung in einem zwölften Ausführungsbeispiel. Eine Kabine 16l weist einen Kabinenboden 48l auf. Die Kabine 16l weist eine Kabinenwand 52l auf. Die Kabine 16l weist einen Gang 18l auf. Die Kabine 16l weist zumindest ein Gepäckfach 58l auf. In der Kabine 16l ist eine Flugzeugsitzvorrichtung angeordnet. Die Flugzeugsitzvorrichtung weist einen Sitzbereich 12l auf. Der Sitzbereich 12l grenzt an den Gang 18l der Kabine 16l an. Die Flugzeugsitzvorrichtung weist einen Flugzeugsitz 661 auf. Die Flugzeugsitzvorrichtung weist eine Umhausung 32l auf. Die Flugzeugsitzvorrichtung weist einen Durchgangsbereich 20l auf. Die Flugzeugsitzvorrichtung weist eine zwischen einem geöffneten Zustand und einem geschlossenen Zustand verstellbare Trenneinheit 14l auf. Die Trenneinheit 14l weist ein ausziehbares Trennelement 22l auf. Das Trennelement 22l weist eine eingefahrene Stellung und zumindest eine ausgefahrene Stellung auf. Das Trennelement 22l ist aus einem Rollo gebildet. Das Trennelement 22l ist zumindest im Wesentlichen aus einem biegeschlaffen Material, insbesondere einem Textil, einem Leder und/oder einer Folie, gebildet. Das Trennelement 22l ist zumindest im Wesentlichen in horizontaler Richtung ausziehbar. Das Trennelement 22l weist eine Ausziehrichtung 84l auf. Die Ausziehrichtung 84l entspricht zumindest im Wesentlichen der horizontalen Richtung. Die Trenneinheit 14l weist eine Verstaueinheit 24l auf. Die Verstaueinheit 24l umfasst eine Rückholeinheit 26l. Die Trenneinheit 14l weist ein Abschlusselement 28l auf. In einer Längsrichtung 56l eines Flugzeugs 46l betrachtet, ist vor der Flugzeugsitzvorrichtung eine weitere Flugzeugsitzvorrichtung mit einer Umhausung 87l angeordnet.

Die Figur 16 zeigt eine schematische Seitenansicht eines Ausschnitts aus der Kabine 16l. Das Trennelement 22l weist zumindest in einem geschlossenen Zustand wenigstens eine verschließbare Öffnung 44l zwischen dem Sitzbereich 12l und dem Rest einer Kabine 16l auf. Die Öffnung 44l ist dazu vorgesehen, als eine Durchreiche zwischen dem Flugzeugsitz 66l und dem Gang 18l genutzt zu werden. Das Trennelement 22l weist zumindest ein Verschlusselement 128l auf. Die Öffnung 44l ist durch zumindest ein Verschlusselement 128l verschließbar. Das zumindest eine Verschlusselement 128l ist vorzugsweise aus dem gleichen Material wie das Trennelement 22l ausgebildet. Das zumindest eine Verschlusselement 128l kann durch ein nicht näher dargestelltes Verbindungsmittel mit dem Trennelement 22l verbunden werden, um die Öffnung 44l zeitweise zu verschließen. Das Verbindungsmittel kann beispielsweise als eine Klettverbindung und/oder Druckknopfverbindung ausgebildet sein. Das Verschlusselement 128l ist vorzugsweise an zumindest einer Stelle permanent fest mit dem Trennelement 22l verbunden. Das Verschlusselement 128l ist vorzugsweise einstückig mit dem Trennelement 22l ausgebildet.

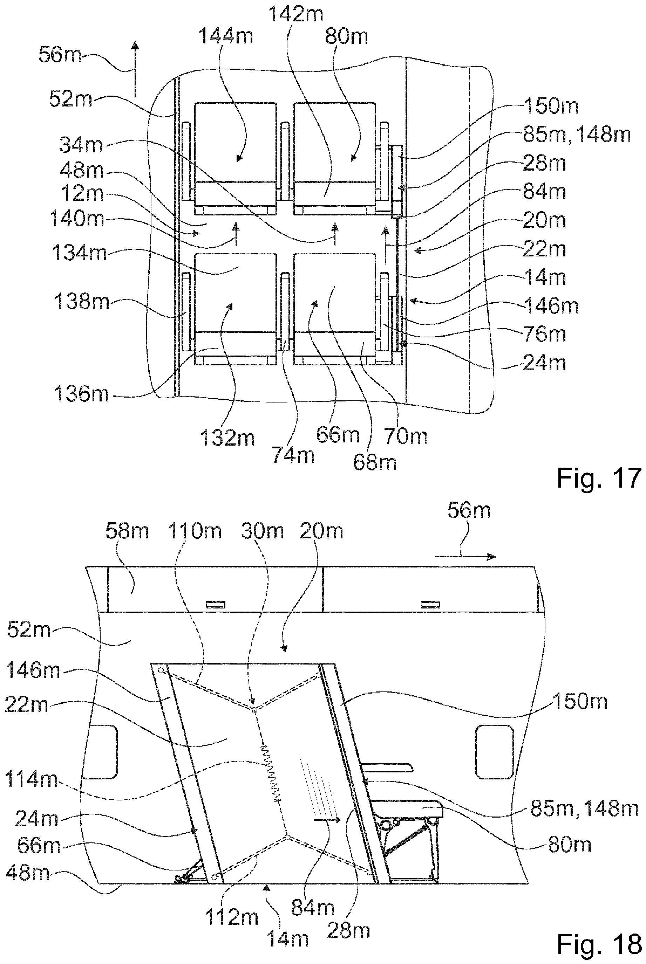

Die Figuren 17 und 18 zeigen eine erfindungsgemäße Flugzeugsitzvorrichtung in einem dreizehnten Ausführungsbeispiel. Eine Kabine 16m weist einen Kabinenboden 48m auf.

Die Kabine 16m weist eine Kabinenwand 52m auf. Die Kabine 16m weist einen Gang 18m auf. Die Kabine 16m weist zumindest ein Gepäckfach 58m auf. In der Kabine 16m ist die zumindest eine erfindungsgemäße Flugzeugsitzvorrichtung angeordnet.

Die Figur 17 zeigt eine schematische Draufsicht auf einen Ausschnitt aus der Kabine 16m. Die Flugzeugsitzvorrichtung weist einen Sitzbereich 12m auf. Der Sitzbereich 12m grenzt an den Gang 18m der Kabine 16m an. Die Flugzeugsitzvorrichtung weist einen Flugzeugsitz 66m auf. Der Flugzeugsitz 66m ist in dem Sitzbereich 12m angeordnet. Die Flugzeugsitzvorrichtung weist einen weiteren Flugzeugsitz 132m auf. Der weitere Flugzeugsitz 132m ist in dem Sitzbereich 12m angeordnet. Der weitere Flugzeugsitz 132m ist in einer Reihe mit dem Flugzeugsitz 66m angeordnet. Der Flugzeugsitz ist neben dem Flugzeugsitz 66m angeordnet. Grundsätzlich ist auch denkbar, dass zwischen dem Flugzeugsitz 66m und dem weiteren Flugzeugsitz 132m eine Konsole angeordnet ist. Der Flugzeugsitz 66m weist einen Sitzboden 68m auf. Der Flugzeugsitz 66m weist eine Rückenlehne 70m auf. Der Flugzeugsitz 66m weist zwei Armlehnen 74m, 76m auf. Der weitere Flugzeugsitz 132m weist einen Sitzboden 134m auf. Der weitere Flugzeugsitz 132m weist eine Rückenlehne 136m auf. Der weitere Flugzeugsitz 132m weist zumindest eine linke Armlehne 138m auf. Die Armlehne 76m ist im vorliegenden Fall als eine rechte Armlehne des weiteren Flugzeugsitzes 132m ausbildet. Die Flugzeugsitze 66m, 132m sind im vorliegenden Fall jeweils als ein Economy-Class-Flugzeugsitz, ein Premium-Economy-Class-Flugzeugsitz oder ein Kurzstrecken-Business-Class-Flugzeugsitz ausgebildet. Die Flugzeugsitze 66m, 132m bilden eine Sitzeinheit aus. Der Flugzeugsitz 66m weist eine Sitzrichtung 34m auf. Der weitere Flugzeugsitz 132m weist eine weitere Sitzrichtung 140m auf. Im vorliegenden Fall ist die Sitzrichtung 34m parallel zu der Längsrichtung 56m des Flugzeugs 46m angeordnet. Grundsätzlich wäre es aber auch denkbar, dass die Sitzrichtung 34m einen Winkel zu der Längsrichtung 56m des Flugzeugs 46m aufweist, wobei die Sitzrichtung 34m parallel zu dem Kabinenboden 48m ausgebildet ist. Die weitere Sitzrichtung 140m ist parallel zu der Sitzrichtung 34m ausgebildet. Die Sitzrichtung 34m kann insbesondere auch entgegen der Längsrichtung 56m des Flugzeugs 46m ausgerichtet sein. In einer Längsrichtung 56m des Flugzeugs 46m betrachtet, ist vor der Flugzeugsitzvorrichtung eine weitere Flugzeugsitzvorrichtung angeordnet. Die weitere Flugzeugsitzvorrichtung weist einen identisch zu dem Flugzeugsitz 66m ausgebildeten Flugzeugsitz 80m auf. Der Flugzeugsitz 80m weist eine Rückenlehne 142m auf. Die weitere Flugzeugsitzvorrichtung weist einen identisch zu dem weiteren Flugzeugsitz 132m ausgebildeten Flugzeugsitz 144m auf. Die Flugzeugsitze 66m, 80m, 132m, 144m sind in einer Sitzposition dargestellt. Die weitere Flugzeugsitzvorrichtung weist eine identisch zu der Sitzeinheit ausgebildete weitere Sitzeinheit auf.

In dem Sitzbereich 12m sind vorzugsweise weitere nicht näher dargestellte Elemente angeordnet, die von einem Passagier nutzbar sind, wie insbesondere eine Konsole, ein Ottoman, Verstaumöglichkeiten, Ablageelemente und/oder Entertainmentvorrichtungen. Die Flugzeugsitzvorrichtung bildet mit zumindest einem dieser Elemente ein Flugzeugsitzmodul aus. Die Flugzeugsitzvorrichtung weist insbesondere keine Umhausung auf. Grundsätzlich kann die Flugzeugsitzvorrichtung auch eine Umhausung aufweisen, die hinter dem Sitzbereich 12m angeordnet ist, wobei sich die Umhausung vorzugsweise nicht seitlich der Sitzeinheit erstreckt.

Die Flugzeugsitzvorrichtung weist einen Durchgangsbereich 20m auf. Der Durchgangsbereich 20m ist in der Längsrichtung 56m des Flugzeugs 46m durch den Flugzeugsitz 66m und durch den Flugzeugsitz 80m begrenzt. Durch den Durchgangsbereich 20m ist der Sitzbereich 12m zugänglich. Der Durchgangsbereich 20m ist zwischen dem Sitzbereich 12m und dem Gang 18m angeordnet. Der Durchgangsbereich 20m erstreckt sich von dem Kabinenboden 48m bis zu der Kabinendecke 50m. Über den Durchgangsbereich 20m ist der Flugzeugsitz 66m von dem Gang 18m erreichbar. Über den Durchgangsbereich 20m ist der weitere Flugzeugsitz 132m von dem Gang 18m erreichbar. Grundsätzlich wäre jedoch auch denkbar, dass der Sitzbereich 12m zwei Durchgangsbereiche aufweist, die jeweils zwischen dem Sitzbereich 12m und unterschiedlichen Gängen angeordnet sind.

Die Flugzeugsitzvorrichtung weist eine zwischen einem geöffneten Zustand und einem geschlossenen Zustand verstellbare Trenneinheit 14m auf. Grundsätzlich wäre jedoch auch denkbar, dass die Flugzeugsitzvorrichtung mehr als eine Trenneinheit 14m aufweist. Die Trenneinheit 14m ist an dem Flugzeugsitz 66m, insbesondere an der Rückenlehne 70m, angeordnet. Die Trenneinheit 14m ist dazu vorgesehen, den zumindest einen Sitzbereich 12m in zumindest einem Betriebszustand zumindest teilweise von einem Rest der Kabine 16m, insbesondere von dem Gang 18m der Kabine 16m, abzutrennen. Die Trenneinheit 14m weist zumindest einen geöffneten Zustand und einen geschlossenen Zustand auf. Die Trenneinheit 14m ist zwischen dem geöffneten Zustand und dem geschlossenen Zustand verstellbar. Vorzugsweise kann die Trenneinheit 14m zusätzlich in zumindest einer Zwischenstellung zwischen dem geöffneten Zustand und dem geschlossenen Zustand gehalten werden. Die Trenneinheit 14m ist dazu vorgesehen, den Durchgangsbereich 20m in ihrem geschlossenen Zustand vollständig zu verschließen. Die Trenneinheit 14m trennt den Sitzbereich 12m in dem geschlossenen Zustand in einer Höhe von dem Kabinenboden 48m bis zu dem obersten Ende der Rückenlehne 70m vollständig physisch und optisch von dem Gang 18m der Kabine 16m ab. Die Trenneinheit 14m versperrt in dem geschlossenen Zustand einen Durchgang zwischen dem Sitzbereich 12m und dem Gang 18m. Die Trenneinheit 14m trennt den Sitzbereich 12m in dem geschlossenen Zustand in einer Höhe von dem Kabinenboden 48m bis zu dem obersten Ende der Rückenlehne 70m komplett blickdicht von dem Gang 18m der Kabine 16m ab. Der Durchgangsbereich 20m ist in dem geschlossenen Zustand teilweise durch die Trenneinheit 14m verschlossen. Der Durchgangsbereich 20m ist in einem Bereich zwischen der Rückenlehne 70m und der Kabinendecke 50m in dem geschlossenen Zustand nicht durch die Trenneinheit 14m verschlossen. Die Trenneinheit 14m ist in dem geöffneten Zustand vollständig geöffnet. In dem geöffneten Zustand ragt die Trenneinheit 14m nicht in den Durchgangsbereich 20m. Die weitere Flugzeugsitzvorrichtung weist eine mit der Trenneinheit 14m identisch ausgebildete Trenneinheit 85m auf. Die Trenneinheit 14m ist in einem vollständig geschlossenen Zustand dargestellt. Die Trenneinheit 85m ist in einem vollständig geöffneten Zustand dargestellt. Die Trenneinheit 14m ist so ausgebildet, dass die Trenneinheit 14m für eine Flugzeugsitzvorrichtung nachrüstbar ist. Die Trenneinheit 14m weist ein ausziehbares Trennelement 22m auf. Das Trennelement 22m weist eine eingefahrene Stellung und zumindest eine ausgefahrene Stellung auf. Das Trennelement 22m ist aus einem Rollo gebildet. Das Trennelement 22m ist zumindest im Wesentlichen aus einem biegeschlaffen Material, insbesondere einem Textil, einem Leder und/oder einer Folie, gebildet. Das Trennelement 22m ist zumindest im Wesentlichen in horizontaler Richtung ausziehbar. Das Trennelement 22m weist eine Ausziehrichtung 84m auf. Die Ausziehrichtung 84m entspricht zumindest im Wesentlichen der horizontalen Richtung. Die Trenneinheit 14m weist eine Verstaueinheit 24m auf. Die Verstaueinheit 24m weist ein Gehäuse 146m auf. Die Verstaueinheit 24m ist im vorliegenden Fall in der Sitzrichtung 34m betrachtet rechts neben dem Flugzeugsitz 66m angeordnet. Die Verstaueinheit 24m ist an dem Flugzeugsitz 66m, insbesondere an der Rückenlehne, angeordnet. Alternativ kann die Verstaueinheit 24m auch an einer Umhausung, die hinter dem Flugzeugsitz 66m angeordnet ist, und/oder an einer seitlichen Verkleidung des Flugzeugsitzes 66m angeordnet sein, wobei die seitliche Verkleidung als ein Rammschutz ausgebildet ist und einen seitlichen Abschluss des Flugzeugsitzes 66m zu dem Gang 18m ausbildet. Eine Haupterstreckungsrichtung der Verstaueinheit 24m ist zumindest im Wesentlichen parallel zu einer Haupterstreckungsebene der Rückenlehne 70m angeordnet. Eine Haupterstreckungsrichtung der Verstaueinheit 24m ist parallel zu der Sitzrichtung 34m angeordnet. Eine Haupterstreckungsrichtung der Verstaueinheit 24m ist im vorliegenden Fall nicht orthogonal zu dem Kabinenboden 48m angeordnet. Die Verstaueinheit 24m umfasst eine nicht näher dargestellte Rückholeinheit. Die Trenneinheit 85m weist eine Verstaueinheit 148m auf. Die Verstaueinheit 148m ist identisch zu der Verstaueinheit 24m ausgebildet. Die Verstaueinheit 148m weist ein Gehäuse 150m auf. Die Trenneinheit 14m weist ein Abschlusselement 28m auf. Das Abschlusselement 28m ist zur Befestigung des Trennelements 22m an der weiteren Flugzeugsitzvorrichtung, insbesondere an dem Flugzeugsitz 80m, vorzugsweise an der Rückenlehne 142m und besonders bevorzugt an der Verstaueinheit 148m, vorgesehen. Das Abschlusselement 28m ist plattenförmig ausgebildet. Das Abschlusselement 28m ist in einer Haupterstreckungsrichtung des Abschlusselements 28m parallel zu einer Haupterstreckungsrichtung der Verstaueinheit 24m ausgerichtet. Das Abschlusselement 28m liegt in der vollständig ausgefahrenen Stellung des Trennelements 22m an dem Gehäuse 150m der Verstaueinheit 85m an.

Die Figur 18 zeigt eine schematische Seitenansicht auf einen Ausschnitt aus der Kabine 16m. Die Trenneinheit 14m weist zumindest eine Führungseinheit 30m auf. Die Führungseinheit 30m weist zwei Scherenelemente 110m, 112m auf. Die Scherenelemente 110m, 112m sind jeweils an dem Abschlusselement 28m und in der Verstaueinheit 24m angeordnet. Die Führungseinheit 30m weist ein Federelement 114m auf. Das Federelement 114m ist als eine Zugfeder ausgebildet. Das Federelement 114m der Führungseinheit 30m ist in zumindest einem Betriebszustand dazu vorgesehen, eine Kraft auf das Abschlusselement 28m aufzubringen, um es von einer ausgefahrenen Stellung in die eingefahrene Stellung zu überführen. Das Federelement 114m der Führungseinheit 30m ist in zumindest einem Betriebszustand dazu vorgesehen, eine Kraft auf das Trennelement 22m und/oder das Abschlusselement 28m aufzubringen, um es in der eingefahrenen Stellung zu fixieren. Die Führungseinheit 30m ist dazu vorgesehen, das Trennelement 22m in einer Stellung zwischen der eingefahrenen Stellung und der ausgefahrenen Stellung zu fixieren. Die Führungseinheit 30m kann zusätzlich und/oder alternativ ein nicht näher dargestelltes Schienenelement und zumindest ein korrespondierendes Führungselement umfassen.

### Bezugszeichen

- 12: Sitzbereich
- 14: Trenneinheit
- 16: Kabine
- 18: Gang
- 20: Durchgangsbereich
- 22: Trennelement
- 24: Verstaueinheit
- 26: Rückholeinheit
- 28: Abschlusselement
- 30: Führungseinheit
- 32: Umhausung
- 34: Sitzrichtung
- 36: Trennelement
- 38: Umlenkelement
- 40: Oberseite
- 42: Abdeckeinheit
- 44: Öffnung
- 46: Flugzeug
- 48: Kabinenboden
- 50: Kabinendecke
- 52: Kabinenwand
- 54: Flugzeugfenster
- 56: Längsrichtung
- 58: Gepäckfach
- 60: Beleuchtungseinheit
- 62: Führungsbereich
- 64: Führungsbereich
- 66: Flugzeugsitz
- 68: Sitzboden
- 70: Rückenlehne
- 72: Beinstütze
- 74: Armlehne
- 76: Armlehne
- 78: Flugzeugsitz
- 80: Flugzeugsitz
- 82: Flugzeugsitz
- 83: Liegefläche
- 84: Ausziehrichtung
- 85: Trenneinheit
- 86: Federelement
- 87: Umhausung
- 88: Drehachse
- 90: Ende
- 92: Umlenkelement
- 94: Bereich
- 96: Ende
- 98: Bereich
- 100: Ende
- 102: Rückholeinheit
- 104: Federelement
- 106: Drehachse
- 108: Scherenelement
- 110: Scherenelement
- 112: Scherenelement
- 114: Federelement
- 115: Lamellenelement
- 116: Hohlraum
- 118: Gehäuse
- 120: Liegefläche
- 122: Drehachse
- 124: Lamellenelement
- 126: Außenkontur
- 128: Verschlusselement
- 130: Nachricht
- 132: Flugzeugsitz
- 134: Sitzboden
- 136: Rückenlehne
- 138: Armlehne
- 140: Sitzrichtung
- 142: Rückenlehne
- 144: Flugzeugsitz
- 146: Gehäuse
- 148: Verstaueinheit
- 150: Gehäuse

## Patentansprüche

1. Flugzeugsitzvorrichtung mit zumindest einem Sitzbereich (12d; 12e; 12m), mit zumindest einer zwischen einem geöffneten Zustand und einem geschlossenen Zustand verstellbaren Trenneinheit (14e; 14d; 14m), die dazu vorgesehen ist, den zumindest einen Sitzbereich (12d; 12e; 12m) in zumindest einem Betriebszustand zumindest teilweise von einem Rest einer Kabine (16d; 16e; 16m), insbesondere von zumindest einem Gang (18d; 18e; 18m) in einer Kabine (16d; 16e; 16m), abzutrennen, und mit zumindest einem Durchgangsbereich (20d; 20e; 20m), durch den der Sitzbereich (12d, 12e; 12m) zugänglich ist, wobei die Trenneinheit (14d; 14e; 14m) dazu vorgesehen ist, den Durchgangsbereich (20d; 20e; 20m) zumindest in ihrem geschlossenen Zustand zumindest teilweise zu verschließen, wobei die zumindest eine Trenneinheit (14d; 14e; 14m) wenigstens ein ausziehbares Trennelement (22d; 22e; 22m) aufweist, das zumindest im Wesentlichen aus einem biegeschlaffen Material, insbesondere einem Textil, einem Leder und/oder einer Folie, gebildet ist, wobei die zumindest eine Trenneinheit (14d; 14e; 14m) wenigstens ein Abschlusselement (28d; 28e; 28m) aufweist, das zur Befestigung des Trennelements (22d; 22e; 22m) an wenigstens einem Kabinenelement vorgesehen ist, wobei
die Trenneinheit (14d; 14e; 14m) zumindest eine Verstaueinheit (24d; 24e; 24m) aufweist, die in einem geöffneten Zustand dazu vorgesehen ist, das Trennelement (22d; 22e; 22m) zumindest im Wesentlichen zu verstauen, wobei das Trennelement (22d; 22e; 22m) zumindest im Wesentlichen in horizontaler Richtung ausziehbar ist, **dadurch gekennzeichnet , dass** die Trenneinheit (14d; 14e; 14m) zumindest eine Führungseinheit (30d; 30e; 30m) aufweist, die ein Scherenelement (108d; 110e, 112e; 110m; 112m) aufweist, das an dem Abschlusselement (28d; 28e; 28m) und in der Verstaueinheit (24d; 24e; 24m) angeordnet ist, und die zumindest dazu vorgesehen ist, das Trennelement (22d; 22e; 22m) und/oder das Abschlusselement (28d; 28e; 28m) in zumindest einem Betriebszustand zu führen und/oder zu fixieren.

2. Flugzeugsitzvorrichtung nach Anspruch 1, **dadurch gekennzeichnet, dass** das Trennelement (22d; 22e; 22m) zumindest im Wesentlichen aus einer zusammenhängenden Konstruktion, insbesondere einem Rollo, einem Plissee oder einem Rollladen, gebildet ist.

3. Flugzeugsitzvorrichtung nach Anspruch 1 oder 2, **dadurch gekennzeichnet, dass** die zumindest eine Verstaueinheit (24d; 24e; 24m) wenigstens eine Rückholeinheit (26d; 26e; 26m) umfasst, die dazu vorgesehen ist, das Trennelement (22d; 22e; 22m) in zumindest einem Betriebszustand zurückzuholen.

4. Flugzeugsitzvorrichtung nach einem der vorhergehenden Ansprüche, **dadurch gekennzeichnet, dass** die Verstaueinheit zumindest im Wesentlichen in horizontaler Richtung beweglich gelagert ist.

5. Flugzeugsitzvorrichtung zumindest nach einem der vorhergehenden Ansprüche, **dadurch gekennzeichnet, dass** die Verstaueinheit zumindest im Wesentlichen schwenkbar gelagert ist.

6. Flugzeugsitzvorrichtung nach einem der vorhergehenden Ansprüche, **gekennzeichnet durch** zumindest eine Umhausung (32d; 32e), die den Sitzbereich (12d; 12e; 12m) zumindest teilweise, in einer Sitzrichtung (34d; 34e; 34m) betrachtet, insbesondere vor und/oder hinter dem Sitzbereich (34d; 34e; 34m) umgibt, wobei die Trenneinheit (14d, 14e; 14m) zumindest teilweise in der Umhausung (32d; 32e) angeordnet oder mit dieser gekoppelt ist.

7. Flugzeugsitzvorrichtung nach einem der vorhergehenden Ansprüche, **dadurch gekennzeichnet, dass** die Trenneinheit (14d; 14e) zumindest ein weiteres Trennelement (36d; 36e) aufweist, das zumindest im Wesentlichen parallel zu dem einen Trennelement (22d; 22e) angeordnet ist.

8. Flugzeugsitzvorrichtung nach einem der vorhergehenden Ansprüche, **dadurch gekennzeichnet, dass** die Trenneinheit zumindest an einer Oberseite wenigstens eine Abdeckeinheit aufweist, die zumindest in einem geschlossenen Zustand dazu vorgesehen ist, das Trennelement zumindest im Wesentlichen zu überdecken.

9. Flugzeugsitzvorrichtung nach einem der vorhergehenden Ansprüche, **dadurch gekennzeichnet, dass** die Trenneinheit (14d; 14e; 14m) zumindest eine Überlasteinheit aufweist, die zumindest dazu vorgesehen ist, die Trenneinheit (14d; 14e; 14m) zumindest in einem Überlastfall, insbesondere Crashfall, selbsttätig in einen geöffneten Zustand zu versetzen.

10. Flugzeugsitzvorrichtung nach einem der vorhergehenden Ansprüche, **dadurch gekennzeichnet, dass** die Trenneinheit (14d; 14e; 14m) zumindest eine Sollbruchstelle aufweist, die in einem Notfall, insbesondere Crashfall, dazu vorgesehen ist, die Trenneinheit (14d; 14e; 14m) zumindest teilweise in einen geöffneten Zustand zu versetzen.

11. Flugzeugsitzvorrichtung nach einem der vorhergehenden Ansprüche, **dadurch gekennzeichnet, dass** das Trennelement zumindest in einem geschlossenen Zustand wenigstens eine verschließbare Öffnung zwischen dem Sitzbereich und dem Rest einer Kabine aufweist.

12. Flugzeugsitzmodul mit einer Flugzeugsitzvorrichtung nach einem der Ansprüche 1-11.

## Claims

1. Aircraft seat device
with at least one seating region (12d; 12e; 12m),
with at least one separation unit (14e; 14d; 14m), which is adjustable between an open state and a closed state and is configured in at least one operation state to separate the at least one seating region (12d; 12e; 12m) at least partially from a remainder of a cabin (16d; 16e; 16m), in particular from an aisle (18d; 18e; 18m) in a cabin (16d; 16e; 16m), and
with at least one passage region (20d; 20e; 20m) through which the seating region (12d; 12e; 12m) is accessible,
the separation unit (14d; 14e; 14m) being configured, at least in its closed state, to close the passage region (20d; 20e; 20m) at least partially,
the at least one separation unit (14d; 14e; 14m) comprising at least one extractable separation element (22d; 22e; 22m) which is at least substantially made of a flexible material, in particular a textile, a leather and/or a film,
the at least one separation unit (14d; 14e; 14m) comprising at least one closure element (28d; 28e; 28m) which is configured for the fastening of the separation element (22d; 22e; 22m) to at least one cabin element,
the separation unit (14d; 14e; 14m) comprising at least one stowage unit (24d; 24e; 24m) which is configured in an open state to at least substantially stow the separation element (22d; 22e; 22m), the separation element (22d; 22e; 22m) being at least substantially extractable in a horizontal direction,
**characterised in that** the separation unit (14d; 14e; 14m) comprises at least one guide unit (30d; 30e; 30m) which has a scissors element (108d; 110e, 112e; 110m, 112m) which is arranged on the closure element (28d; 28e; 28m) and in the stowage unit (24d; 24e; 24m) and which is at least configured for guiding and/or fixing the separation element (22d; 22e; 22m) and/or the closure element (28d; 28e; 28m) in at least one operation state.

2. Aircraft seat device according to claim 1,
**characterised in that** the separation element (22d; 22e; 22m) is realized at least substantially by a coherent construction, in particular a roller blind, a plissé or a roller shutter.

3. Aircraft seat device according to claim 1 or 2,
**characterised in that** the at least one stowage unit (24d; 24e; 24m) comprises at least one retrieving unit (26d; 26e; 26m) that is configured for retrieving the separation element (22d; 22e; 22m) in at least one operation state.

4. Aircraft seat device according to one of the preceding claims,
**characterised in that** the stowage unit is supported so as to be movable at least substantially in a horizontal direction.

5. Aircraft seat device according to one of the preceding claims,
**characterised in that** the stowage unit is supported so as to be at least substantially pivotable.

6. Aircraft seat device according to one of the preceding claims,
**characterised by** at least one enclosure (32d; 32e) which encloses the seating region (12d; 12e; 12m) at least partially, viewed in a sitting direction (34d; 34e; 34m), in particular in front of and/or behind the seating region (12d; 12e; 12m),
wherein the separation unit (14d; 14e; 14m) is at least partially arranged in the enclosure (32d; 32e) or coupled therewith.

7. Aircraft seat device according to one of the preceding claims,
**characterised in that** the separation unit (14d; 14e) comprises at least one further separation element (36d; 36e), which is arranged at least substantially parallel to the one separation element (22d; 22e).

8. Aircraft seat device according to one of the preceding claims,
**characterised in that** the separation unit comprises at least on an upper side at least one cover unit, which is at least in a closed state configured to at least substantially cover the separation element.

9. Aircraft seat device according to one of the preceding claims,
**characterised in that** the separation unit (14d; 14e; 14m) comprises at least one overload unit which is at least configured to bring the separation unit (14d; 14e; 14m) automatically into an open state at least in an overload case, in particular in a crash case.

10. Aircraft seat device according to one of the preceding claims,
**characterised in that** the separation unit (14d; 14e; 14m) comprises at least one predetermined rupture point which is configured in an emergency case, in particular in a crash case, to bring the separation unit (14d; 14e; 14m) at least partially into an open state.

11. Aircraft seat device according to one of the preceding claims,
**characterised in that** at least in a closed state the separation element comprises at least one closable opening between the seating region and the remainder of a cabin.

12. Aircraft seat module with an aircraft seat device according to one of claims 1 to 11.

## Revendications

1. Dispositif de siège d'avion
avec au moins une zone d'assise (12d ; 12e ; 12m),
avec au moins une unité-separatrice (14e ; 14d ; 14m) ajustable entre un état ouvert et un état fermé et qui est prévue, en au moins un état de fonctionnement, pour séparer l'au moins une zone d'assise (12d ; 12e ; 12m) au moins partiellement du reste d'une cabine (16d ; 16e ; 16m), en particulier d'au moins une aisle (18d ; 18e ; 18m) dans une cabine (16d ; 16e ; 16m), et
avec au moins une zone de passage (20d ; 20e ; 20m) par laquelle la zone d'assise (12d ; 12e ; 12m) est accessible,
l'unité séparatrice (14d ; 14e ; 14m) étant prévue au moins en état fermé pour au moins partiellement fermer la zone de passage (20d ; 20e ; 20m),
l'au moins une unité séparatrice (14d ; 14e ; 14m) comprenant au moins un élément séparateur extractible (22d ; 22e ; 22m) qui est formé au moins sensiblement d'un matériau souple, notamment un textile, un cuir et/ou une feuille,
l'au moins une unité séparatrice (14d ; 14e ; 14m) comprenant au moins un élément de clôture (28d ; 28e ; 28m) qui est prévu pour un fixement de l'élément séparateur (22d ; 22e ; 22m) à au moins un élément de cabine,
l'unité séparatrice (14d ; 14e ; 14m) comprenant au moins une unité de rangement (24d ; 24e ; 24m) qui est prévue en état ouvert pour au moins sensiblement ranger l'élément séparateur (22d ; 22e ; 22m), l'élément séparateur (22d ; 22e ; 22m) étant au moins sensiblement extractible dans une direction horizontale,
**caractérisé en ce que** l'unité séparatrice (14d ; 14e ; 14m) inclut au moins une unité de guidage (30d ; 30e ; 30m) qui comprend un élément à ciseaux (108d ; 110e, 112e ; 110m, 112m) disposé sur l'élément de clôture (28d ; 28e ; 28m) et dans l'unité de rangement (24d ; 24e ; 24m) et qui est au moins prévue, en au moins un état de fonctionnement, pour guider et/ou fixer l'élément séparateur (22d ; 22e ; 22m) et/ou l'élément de clôture (28d ; 28e ; 28m).

2. Dispositif de siège d'avion selon la revendication 1,
**caractérisé en ce que** l'élément séparateur (22d ; 22e ; 22m) est formé au moins sensiblement d'une construction cohérente, en particulier d'un volet roulant, d'un plissé ou d'un contrevent roulant.

3. Dispositif de siège d'avion selon la revendication 1 ou 2,
**caractérisé en ce que** l'au moins une unité de rangement (24d ; 24e ; 24m) comporte au moins une unité de rappel (26d ; 26e ; 26m) qui est prévue en au moins un état de fonctionnement pour ramener l'élément séparateur (22d ; 22e ; 22m).

4. Dispositif de siège d'avion selon l'une des revendications précédentes,
**caractérisé en ce que** l'unité de rangement est supportée au moins sensiblement d'une telle manière qu'elle est mouvable dans une direction horizontale.

5. Dispositif de siège d'avion selon l'une des revendications précédentes,
**caractérisé en ce que** l'unité de rangement est supportée au moins sensiblement de façon pivotable.

6. Dispositif de siège d'avion selon l'une des revendications précédentes,
**caractérisé par** au moins un enclos (32d ; 32e) entourant la zone d'assise (12d ; 12e ; 12m) au moins partiellement, vu en direction d'assise (34d ; 34e ; 34m), en particulier avant et/ou derrière la zone d'assise (12d ; 12e ; 12m),
l'unité séparatrice (14d ; 14e ; 14m) étant au moins partiellement disposée dans l'enclos (32d ; 32e) ou couplé avec l'enclos (32d ; 32e).

7. Dispositif de siège d'avion selon l'une des revendications précédentes,
**caractérisé en ce que** l'unité séparatrice (14d ; 14e) comprend au moins un autre élément séparateur (36d ; 36e) disposé au moins sensiblement en parallèle avec l'un élément séparateur (22d ; 22e).

8. Dispositif de siège d'avion selon l'une des revendications précédentes,
**caractérisé en ce que** l'unité séparatrice comprend au moins sur une face supérieure au moins une unité de couverture qui est prévue, au moins en état fermé, pour au moins sensiblement couvrir l'élément séparateur.

9. Dispositif de siège d'avion selon l'une des revendications précédentes,
**caractérisé en ce que** l'unité séparatrice (14d ; 14e ; 14m) comprend au moins une unité de surcharge qui est au moins prévue, au moins en cas d'une surcharge, en particulier en cas de crash, pour mettre l'unité séparatrice (14d ; 14e ; 14m) automatiquement dans un état ouvert.

10. Dispositif de siège d'avion selon l'une des revendications précédentes,
**caractérisé en ce que** l'unité séparatrice (14d ; 14e ; 14m) comporte au moins un point de rupture configuré, en cas d'émergence, en particulier en cas de crash, pour mettre l'unité séparatrice (14d ; 14e ; 14m) au moins partiellement dans un état ouvert.

11. Dispositif de siège d'avion selon l'une des revendications précédentes,
**caractérisé en ce que** l'élément séparateur comprend, au moins en état fermé, au moins un orifice fermable entre la zone d'assise et le reste d'une cabine.

12. Module de siège d'avion avec un dispositif de siège d'avion selon l'une des revendications 1 à 11.
